# EUROPEAN PATENT APPLICATION

(11) **EP 4 432 624 A1**
(43) Date of publication of application: **18.09.2024**
(21) Application number: 24160279.6
(22) Date of filing: 28.02.2024
(51) Int. Cl.: H04L 45/52, H04L 45/74, H04L 45/00, H04L 45/60, H04L 49/25, H04L 49/00

(54) **INTER-CARD MESSAGING IN A ROUTER CHASSIS USING DATA PACKETS**

(30) Priority: 14.03.2023 US 202318183591
(71) Applicant: Nokia Solutions and Networks Oy, 02610 Espoo (FI)
(72) Inventor: Dutta, Pranjal Kumar, Sunnyvale, 94086 (US)
(74) Representative: Swindell & Pearson Limited

(57) **Abstract**

Various example embodiments for supporting communication of inter-card control messages in a router chassis are presented herein. The communication of an inter-card control message in a router chassis may be performed using a data packet sent over a switch fabric of the router chassis. The data packet may include a payload and a data packet header, where the payload includes the inter-card control message and the data packet header includes an indication that the data packet includes the inter-card control message. The inter-card control message may be sent over the switch fabric indirectly using a data packet protocol header encapsulating the payload and a switch fabric header encapsulating the data packet protocol header. The inter-card control message may be sent over the switch fabric directly using a switch fabric header encapsulating the payload.

## Description

### TECHNICAL FIELD

Various example embodiments relate generally to communication systems and, more particularly but not exclusively, to supporting inter-card control operations in a router chassis configured to be deployed in a communication system.

### BACKGROUND

In communication networks, various communications technologies may be used to support various types of communications.

### SUMMARY

In at least some example embodiments, an apparatus includes at least one processor and at least one memory storing instructions that, when executed by the at least one processor, cause the apparatus at least to obtain, at a first card of a router, an inter-card control message intended for a second card of the router, provide, at the first card, a data packet including a payload and a data packet header, wherein the payload includes the inter-card control message, and send, from the first card toward the second card via a switch fabric of the router, the data packet. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the first card is a forwarding card. In at least some example embodiments, the inter-card control message is generated by a packet processor of the forwarding card or a central processing unit of the forwarding card. In at least some example embodiments, the second card is a second forwarding card or a control card.

In at least some example embodiments, a non-transitory computer readable medium includes program instructions that, when executed by an apparatus, cause the apparatus at least to obtain, at a first card of a router, an inter-card control message intended for a second card of the router, provide, at the first card, a data packet including a payload and a data packet header, wherein the payload includes the inter-card control message, and send, from the first card toward the second card via a switch fabric of the router, the data packet. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the first card is a forwarding card. In at least some example embodiments, the inter-card control message is generated by a packet processor of the forwarding card or a central processing unit of the forwarding card. In at least some example embodiments, the second card is a second forwarding card or a control card.

In at least some example embodiments, a method includes obtaining, at a first card of a router, an inter-card control message intended for a second card of the router, providing, at the first card, a data packet including a payload and a data packet header, wherein the payload includes the inter-card control message, and sending, from the first card toward the second card via a switch fabric of the router, the data packet. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the first card is a forwarding card. In at least some example embodiments, the inter-card control message is generated by a packet processor of the forwarding card or a central processing unit of the forwarding card. In at least some example embodiments, the second card is a second forwarding card or a control card.

In at least some example embodiments, an apparatus includes means for obtaining, at a first card of a router, an inter-card control message intended for a second card of the router, means for providing, at the first card, a data packet including a payload and a data packet header, wherein the payload includes the inter-card control message, and means for sending, from the first card toward the second card via a switch fabric of the router, the data packet. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the first card is a forwarding card. In at least some example embodiments, the inter-card control message is generated by a packet processor of the forwarding card or a central processing unit of the forwarding card. In at least some example embodiments, the second card is a second forwarding card or a control card.

In at least some example embodiments, an apparatus includes at least one processor and at least one memory storing instructions that, when executed by the at least one processor, cause the apparatus at least to receive, by a card of a router via a switch fabric of the router, a data packet including a payload and a data packet header, wherein the payload includes an inter-card control message and obtain, by the card from the data packet, the inter-card control message. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the inter-card control message is obtained from the data packet based on the indication that the payload includes the inter-card control message. In at least some example embodiments, the card is a forwarding card or a control card. In at least some example embodiments, the card is a forwarding card, the data packet is received by a packet processor of the forwarding card, and the inter-card control message is obtained from the data packet by the packet processor of the forwarding card. In at least some example embodiments, the inter-card control message is processed by the packet processor of the forwarding card. In at least some example embodiments, the inter-card control message is provided from the packet processor of the forwarding card toward a central processing unit of the forwarding card.

In at least some example embodiments, a non-transitory computer readable medium includes program instructions that, when executed by an apparatus, cause the apparatus at least to receive, by a card of a router via a switch fabric of the router, a data packet including a payload and a data packet header, wherein the payload includes an inter-card control message and obtain, by the card from the data packet, the inter-card control message. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the inter-card control message is obtained from the data packet based on the indication that the payload includes the inter-card control message. In at least some example embodiments, the card is a forwarding card or a control card. In at least some example embodiments, the card is a forwarding card, the data packet is received by a packet processor of the forwarding card, and the inter-card control message is obtained from the data packet by the packet processor of the forwarding card. In at least some example embodiments, the inter-card control message is processed by the packet processor of the forwarding card. In at least some example embodiments, the inter-card control message is provided from the packet processor of the forwarding card toward a central processing unit of the forwarding card.

In at least some example embodiments, a method includes receiving, by a card of a router via a switch fabric of the router, a data packet including a payload and a data packet header, wherein the payload includes an inter-card control message and obtaining, by the card from the data packet, the inter-card control message. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the inter-card control message is obtained from the data packet based on the indication that the payload includes the inter-card control message. In at least some example embodiments, the card is a forwarding card or a control card. In at least some example embodiments, the card is a forwarding card, the data packet is received by a packet processor of the forwarding card, and the inter-card control message is obtained from the data packet by the packet processor of the forwarding card. In at least some example embodiments, the inter-card control message is processed by the packet processor of the forwarding card. In at least some example embodiments, the inter-card control message is provided from the packet processor of the forwarding card toward a central processing unit of the forwarding card.

In at least some example embodiments, an apparatus includes means for receiving, by a card of a router via a switch fabric of the router, a data packet including a payload and a data packet header, wherein the payload includes an inter-card control message and means for obtaining, by the card from the data packet, the inter-card control message. In at least some example embodiments, the data packet header includes a switch fabric header. In at least some example embodiments, the data packet header includes a data packet protocol header and a switch fabric header. In at least some example embodiments, the data packet protocol header includes at least one of an Ethernet header, a Multiprotocol Label Switching (MPLS) header, a Bit Indexed Explicit Replication (BIER) header, or an Internet Protocol (IP) header. In at least some example embodiments, the data packet header includes an indication that the payload includes the inter-card control message. In at least some example embodiments, the data packet header includes a data packet protocol header and a switch fabric header, and the indication that the payload includes the inter-card control message is encoded within an address field of the data packet protocol header. In at least some example embodiments, the inter-card control message is obtained from the data packet based on the indication that the payload includes the inter-card control message. In at least some example embodiments, the card is a forwarding card or a control card. In at least some example embodiments, the card is a forwarding card, the data packet is received by a packet processor of the forwarding card, and the inter-card control message is obtained from the data packet by the packet processor of the forwarding card. In at least some example embodiments, the inter-card control message is processed by the packet processor of the forwarding card. In at least some example embodiments, the inter-card control message is provided from the packet processor of the forwarding card toward a central processing unit of the forwarding card.

### BRIEF DESCRIPTION OF THE DRAWINGS

The teachings herein can be readily understood by considering the following detailed description in conjunction with the accompanying drawings, in which:
FIG. 1 depicts an example embodiment of a router chassis configured to support communication of inter-card control messages using data packets on the switch fabric of the router chassis;
FIG. 2 depicts an example embodiment of a control card for use in the router chassis of FIG. 1;
FIG. 3 depicts an example embodiment of a forwarding card for use in the router chassis of FIG. 1;
FIG. 4 depicts an example embodiment of a router chassis configured to support communication of inter-card control messages using data packets on the switch fabric of the router chassis;
FIG. 5 depicts an example embodiment for forwarding of data packets of a data packet flow through the forwarding plane of the router chassis of FIG. 4 prior to a fast reroute operation;
FIGs. 6A - 6F depict example embodiments of packets for supporting forwarding of Ethernet packets through the forwarding plane of the router chassis of FIG. 4;
FIGs. 7A and 7B depict example embodiments for communication of an inter-card control message through the switch fabric of the router chassis of FIG. 4 based on detection of a failure associated with the data packet flow of FIG. 5;
FIG. 8 depicts an example embodiment for forwarding of data packets of a data packet flow through the forwarding plane of the router chassis of FIG. 4 after a fast reroute operation performed in response to the failure associated with the data packet flow of FIG. 5;
FIG. 9 depicts an example embodiment for supporting communication of an inter-card control message using a data packet where the inter-card control message is transported indirectly on the switch fabric;
FIGs. 10A - 10B depict example embodiments for supporting communication of an inter-card control message using a data packet where the data packet is based on Ethernet;
FIG. 11 depicts an example embodiment for supporting communication of an inter-card control message using a data packet where the inter-card control message is transported directly on the switch fabric;
FIG. 12 depicts an example embodiment of an inter-card control message which may be transported using a data packet on the switch fabric;
FIG. 13 depicts an example embodiment of an inter-card control message, which may be transported using a data packet on the switch fabric, configured to report a port down event;
FIG. 14 depicts an example embodiment of a method for supporting sending of an inter-card control message using a data packet on a switch fabric of a router chassis;
FIG. 15 depicts an example embodiment of a method for supporting receiving of an inter-card control message using a data packet on a switch fabric of a router chassis;
FIG. 16 depicts an example embodiment of a method for supporting sending of an inter-card control message using a data packet on a switch fabric of a router chassis;
FIG. 17 depicts an example embodiment of a method for supporting receiving of an inter-card control message using a data packet on a switch fabric of a router chassis;
FIG. 18 depicts an example embodiment of a method for supporting communication of an inter-card control message using a data packet on a switch fabric of a router chassis; and
FIG. 19 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting communication of inter-card control messages in a router chassis are presented herein. The communication of inter-card control messages in a router chassis may be performed using data packets sent over the packet forwarding plane of the router chassis. The communication of an inter-card control message in a router chassis may be performed using a data packet sent over a switch fabric of the router chassis. The data packet may include a payload and a data packet header, where the payload includes the inter-card control message and the data packet header includes an indication that the data packet includes the inter-card control message. The inter-card control message may be sent over the switch fabric indirectly using a data packet protocol header encapsulating the payload and a switch fabric header encapsulating the data packet protocol header. The inter-card control message may be sent over the switch fabric directly using a switch fabric header encapsulating the payload without using a data packet protocol header. The inter-card control messages may include various types of inter-card control messages (e.g., inter-card control messages reporting failures for triggering fast reroute (FRR) operations or other types of inter-card control messages which may be exchanged between cards of a router chassis). It will be appreciated that these and various other example embodiments and advantages or potential advantages of example embodiments for supporting communication of inter-card control messages in a router chassis may be further understood by way of reference to the various figures, which are discussed further below.

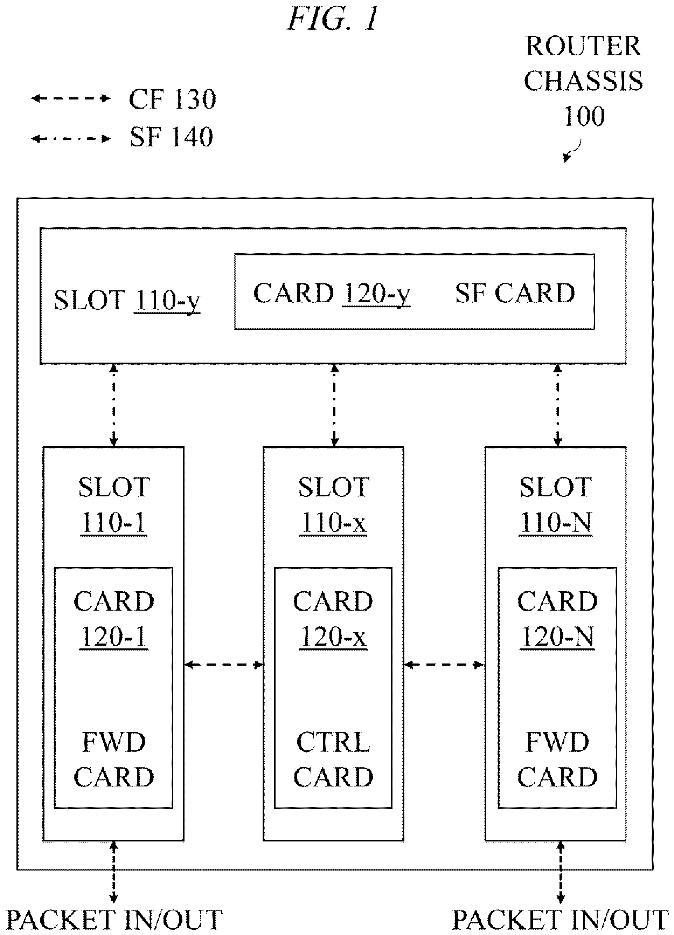

FIG. 1 depicts an example embodiment of a router chassis configured to support communication of inter-card control messages using data packets.

As depicted in FIG. 1, the router chassis 100 includes a fixed number of slots 110-1 to 110-N (collectively, slots 110, with slot 110-1, slot 110-x, slot 110-y, and slot 110-N being illustrated) hosting a set of cards 120-1 to 120-N (collectively, cards 120, with card 120-1 being illustrated as being within slot 110-1, card 120-x being illustrated as being within slot 110-x, card 120-y being illustrated as being within slot 110-y, and card 120-N being illustrated as being within slot 110-N), respectively. Here, a slot 110 is a location within the router chassis 100 that is configured to accept a card 120. Here, a card 120 is a unit of the router chassis 100 that is configured to perform a distinct set of functions, such as traffic forwarding functions, switch fabric functions, control functions, or the like. The set of cards 120 includes one or more forwarding (FWD) cards that operate in the data plane, one or more control (CTRL) cards that operate in the control plane, and one or more switch fabric (SF) cards that support the data plane and the control plane.

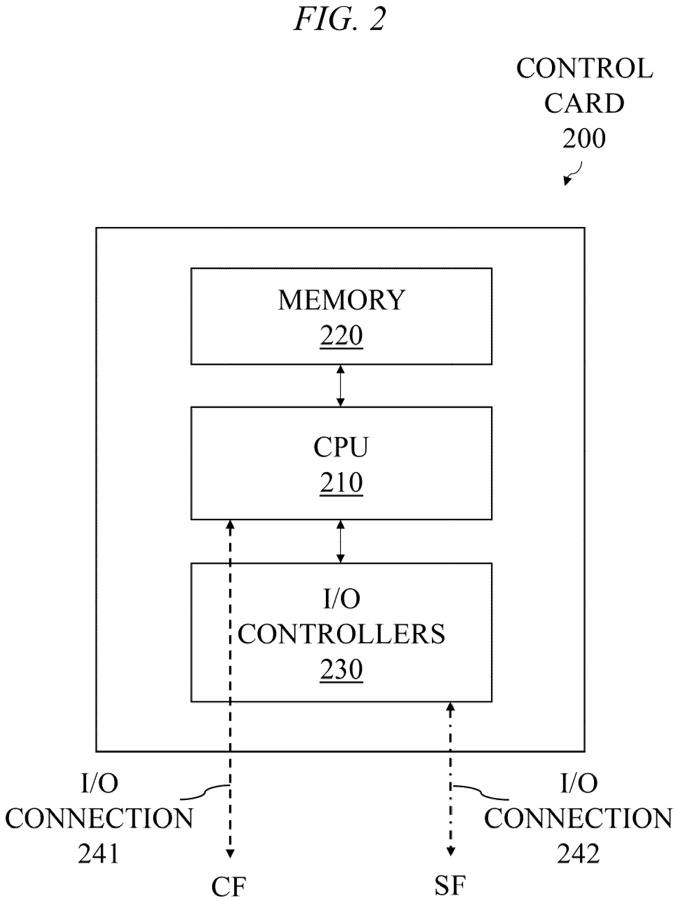

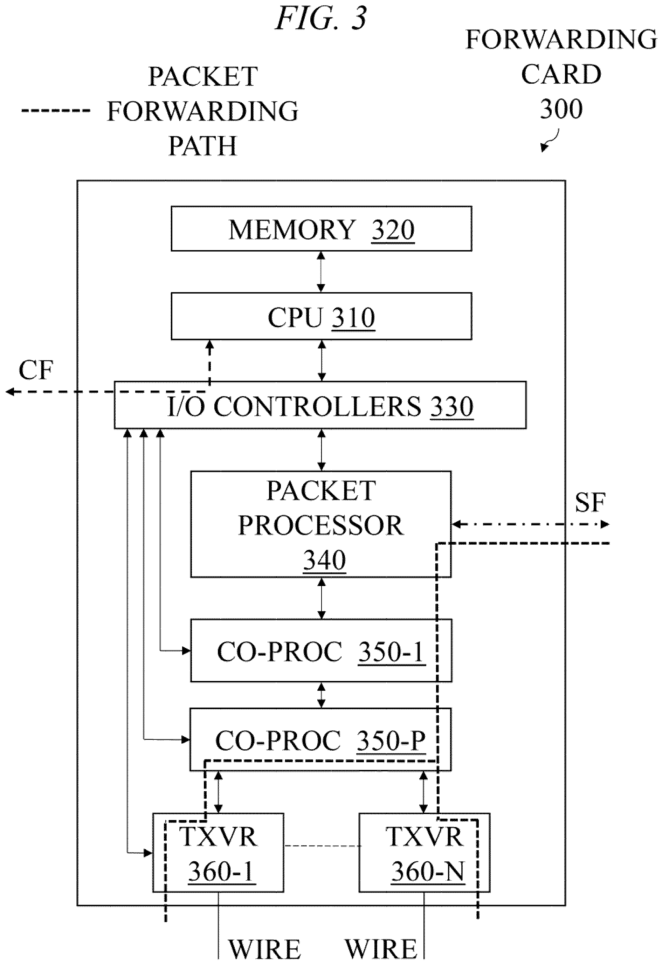

As depicted in FIG. 1, in the router chassis 100, slot 110-1 and slot 110-N each include FWD cards (card 120-1 and card 120-N, respectively), slot 110-x includes a CTRL card (card 120-x), and slot 110-y includes an SF card (card 120-y). The CTRL card is configured to implement at least part of the control plane of the router chassis 100. The CTRL card is configured to support control functions for the FWD cards. An example embodiment of a CTRL card is presented in FIG. 2. The FWD cards are configured to implement the forwarding plane of the router chassis 100 (e.g., receiving packets from the network, processing packets, and sending packets to the network). The FWD cards each may support one or more interfaces (e.g., ports or the like) configured to support communication of packets (denoted as "packets in/out" supporting communication of packets to/from the router chassis 100). An example embodiment of an FWD card is presented in FIG. 3. It will be appreciated that the FWD card(s), SF card(s), and CTRL card(s) may be installed in any suitable slot(s) of the router chassis 100.

As depicted in FIG. 1, the router chassis 100 includes a control fabric (CF) 130. The CF 130 is configured to support control plane communications (e.g., supporting communication of control plane packets originating or terminating in the control plane) between the CTRL card and the FWD cards (illustratively, the CF 130 supports control communications between the CTRL card in slot 110-x and the FWD cards in slot 110-1 and slot 110-N). The CF 130 may be configured to support various control operations performed by the CTRL card for the FWD cards (e.g., setting up packet forwarding states, exchanging various notifications and alarms, gathering statistics and telemetry information, or the like, as well as various combinations thereof). The CF 130 may be configured to support various other control operations which may be supported by the control plane of the router chassis 100.

As depicted in FIG. 1, the router chassis 100 includes a switch fabric (SF) 140. The SF 140, which includes the SF card in slot 110-y, supports communications between the SF card in slot 110-y and each of the other cards in the other slots (illustratively, the FWD cards in slot 110-1 and slot 110-N and the CTRL card in slot 110-x). The SF 140 may be orchestrated by the SF card in slot 110-y. The SF 140 is configured to support data plane communications (e.g., supporting communication of data packets of traffic flows traversing the router chassis 100) between FWD cards. The SF 140 is configured to support control plane communications (e.g., supporting communication of control plane packets originating or terminating in the control plane) between the CTRL card and the FWD cards. In at least some example embodiments, as presented herein, the SF 140 is configured to support propagation of data packets transporting inter-card control messages. The SF 140 may be configured to support various other data plane operations which may be supported by the data plane of the router chassis 100 and/or various other control operations which may be supported by the control plane of the router chassis 100.

It will be appreciated that the router chassis 100, although primarily presented with respect to specific types, numbers, and arrangements of elements and interfaces, may be implemented using various other types, numbers, and/or arrangements of elements, using various other types, numbers, and/or arrangements of interfaces, or the like, as well as various combinations thereof.

FIG. 2 depicts an example embodiment of a control card for use in the router chassis of FIG. 1.

As discussed herein, the control card 200 is configured to provide control plane operations for a router chassis in which the control card 200 is deployed. For example, the control card 200 may be configured to set the packet forwarding states into the packet forwarding plane (also known as the data plane). For example, the control card 200 may be configured to run various control protocols, such as Open Shortest Path First (OSPF), Intermediate-System-to-Intermediate-System (IS-IS), Border Gateway Protocol (BGP), Bidirectional Forwarding Detection (BFD), Label Distribution Protocol (LDP), Resource Reservation Protocol (RSVP), RSVP - Traffic Engineering (RSVP-TE), or the like, as well as various combinations thereof. For example, the control card 200 may be configured to provide configuration management. It will be appreciated that the control card 200 may be configured to provide various other control plane functions for a router chassis.

As depicted in FIG. 2, the control card 200 includes a central processing unit (CPU) 210, a memory 220, and input/output (I/O) controllers 230. The CPU 210, the memory 220, and the I/O controllers 230 may be configured to cooperate to support various control plane functions at the control card 200. The CPU 210 is configured to control the operation of the control card 200. The CPU 210 is connected to the memory 220. The memory 220 is configured to store various types of information related to the operation of the control card 200 (e.g., instructions which may be executed by the CPU 210 for providing various control plane functions at the control card 200, control data related to control plane functions provided by the control card 200, or the like, as well as various combinations thereof). The CPU 210 also is connected to the I/O controllers 230 for communicating with various I/O devices. The I/O controllers 230 may be configured to interface with various other elements using high-speed communication buses or other suitable types of interfaces or connections. The CPU 210, the memory 220, and the I/O controllers 230 may be configured to cooperate to support various other control plane functions at the control card 200.

As depicted in FIG. 2, the control card 200 is configured to interface with the control fabric (CF) and the switch fabric (SF) of the router chassis in which the control card 200 is deployed. The control card 200 may interface with the CF and the SF via the I/O controllers 230. As depicted in FIG. 2, two I/O connections supported by the I/O controllers 230 include an I/O connection 241 to the CF and an I/O connection 242 to the SF. The I/O connection 241 to the CF terminates on the CPU 210 and traverses the I/O controllers 230 (e.g., via an I/O controller that is specific to the CF). The I/O connection 242 to the SF terminates on the I/O controllers 230 (e.g., an I/O controller that is specific to the SF). It will be appreciated that the control card 200 may interface with the CF and the SF of the router chassis in which the control card 200 is deployed in various other ways.

It will be appreciated that the control card 200, although primarily presented with respect to specific types, numbers, and arrangements of elements and interfaces, may be implemented using various other types, numbers, and/or arrangements of elements, using various other types, numbers, and/or arrangements of interfaces, or the like, as well as various combinations thereof.

FIG. 3 depicts an example embodiment of a forwarding card for use in the router chassis of FIG. 1.

As discussed herein, the forwarding card 300 is configured to provide forwarding plane operations for a router chassis in which the forwarding card 300 is deployed. For example, the forwarding card 300 may be configured to supporting handling of packets in the forwarding plane, including receiving the packets, processing the packets, and sending the packets. For example, the forwarding card 300 may be configured to support various packet processing functions. For example, the forwarding card 300 may be configured to maintain packet forwarding states for the packet forwarding plane. For example, the forwarding card 300 may be configured support forwarding of data packets which may be based on various data plane protocols, such as Ethernet, Multiprotocol Label Switching (MPLS), Bit-Indexed Explicit Replication (BIER), Internet Protocol (IP), or the like, as well as various combinations thereof. It will be appreciated that the forwarding card 300 may be configured to provide various other control functions for a router chassis.

As depicted in FIG. 3, the forwarding card 300 includes a central processing unit (CPU) 310, a memory 320, input/output (I/O) controllers 330, a packet processor 340, a set of co-processors 350-1 to 350-P (collectively, co-processors 350), and a set of transceivers 360-1 to 360-N (collectively, transceivers 360). The CPU 310 is connected to the memory 320. The CPU 310 also is connected to the I/O controllers 330 for communicating with various I/O devices. The packet processor 340 is connected to the I/O controllers 330 and also may be connected to one or more of the co-processors 350 (illustratively, only a direct connection to co-processor 350-1 is depicted). The co-processors 350 are each connected to the I/O controllers 330 and may be connected to each other (illustratively, only a direct connection between co-processor 350-1 and co-processor 350-P is depicted) and may be connected to the packet processor 340 (illustratively, for purposes of clarity, only a direct connection from co-processor 350-1 to the packet processor 340 is depicted). The transceivers 360 are each connected to the I/O controllers 330 (illustratively, for purposes of clarity, only a connection between transceiver 360-1 and the I/O controllers 330 is depicted) and may be connected to each other (illustratively, for purposes of clarity, only a direct connection between transceiver 360-1 and transceiver 360-N is depicted) and may be connected to the packet processor 340 (illustratively, for purposes of clarity, these connections are not depicted) and/or one or more of the co-processors 350 (illustratively, for purposes of clarity, only a direct connection from the transceivers 360 to the co-processor 350-P is depicted). It will be appreciated that the various elements of the forwarding card 300 may be communicatively connected in various other ways.

The CPU 310, the memory 320, and the I/O controllers 330 may be configured to cooperate to support various forwarding plane functions at the forwarding card 300. The CPU 310 is configured to control the operation of the forwarding card 300. The CPU 310 may be configured to receive various control messages/commands from a control plane card through the CF and then trigger actions on packet forwarding components (e.g., packet processor 340, co-processors 350, transceivers 360, or the like) through I/O connections to the packet forwarding components. The memory 320 is configured to store various types of information related to the operation of the forwarding card 300 (e.g., instructions which may be executed by the CPU 310 for providing various forwarding plane functions at the forwarding card 300, data related to forwarding plane functions provided by the forwarding card 300, or the like, as well as various combinations thereof). The I/O controllers 330 may be configured to interface with various other elements using high-speed communication buses or other suitable types of interfaces or connections. The CPU 310, the memory 320, and/or the I/O controllers 330 may be configured to co-operate to support various other forwarding plane functions at the forwarding card 300.

The packet processor 340 and the co-processors 350 may be configured to provide various forwarding plane functions at the forwarding card 300. For example, the packet processor 340 may perform processing related to forwarding of packets based on one or more headers of one or more data plane protocols (e.g., Ethernet, MPLS, BIER, IPv4, IPv6, or the like, as well as various combinations thereof), such as where the information in packets headers of the packets maps the packets to flows and forwarding decisions are made for the packets based on state programmed for the flows in one or more forwarding tables stored in memory of the packet processor 340. For example, the co-processors 350 may perform processing associated with supporting Layer 2 functions (e.g., Media Access Control (MAC) or the like), Layer 1 functions (e.g., physical layer processing functions), security functions (e.g., encryption/decryption, authentication, or the like), or the like, as well as various combinations thereof. The packet processor 340 and/or the co-processors 350 may be configured to provide various other forwarding plane functions at the forwarding card 300.

As depicted in FIG. 3, the forwarding card 300 is configured to interface with the switch fabric (SF) and the control fabric (CF) of the router chassis in which the forwarding card 300 is deployed. The forwarding card 300 may interface with the SF via the packet processor 340. The forwarding card 300 may interface with the CF via the I/O controllers 330 (illustratively, an I/O connection to the CF may terminate on the CPU 310 and traverse the I/O controllers 330). It will be appreciated that the forwarding card 300 may interface with the SF and the CF of the router chassis in which the forwarding card 300 is deployed in various other ways.

As discussed above, the forwarding card 300 is configured to receive data packets on the packet receive (ingress) side of the router chassis. A transceiver 360 receives a data packet from a port (received over the wire). The transceiver 360 sends the data packet through the co-processors 350 until the data packet reaches the packet processor 340. The packet processor 340 looks up various forwarding states based on one or more data packet protocol headers in the data packet (e.g., Ethernet, MPLS, BIER, IP, or the like) and sends the packet to the SF by adding an internal header, referred to as a switch fabric (SF) header, that includes the indication of the destination card (e.g., a CTRL card or FWD card) for which the data packet is intended and some commands for the destination card. The SF card receives the data packet with the SF header, parses the SF header, and, based on information in the SF header, provides the data packet to the destination card. If the destination card is a CTRL card, then the data packet is handled by software running on the CPU of the CTRL card. If the destination card is a FWD card then the FWD card performs the actions described below for the transmit (egress) side of the router chassis.

As discussed above, the forwarding card 300 is configured to send packets on the packet transmit (egress) side. The packet processor 340 receives the data packet including the SF header from the SF card. The packet processor 340 looks up various states based on one or more data packet protocol headers in the data packet and/or based on one or more commands included in the SF header. The packet processor 340 removes the SF header from the data packet and, based on various states at the egress side, may modify the existing data packet protocol header(s) and/or add one or more additional data packet protocol headers. The data packet is propagated through the co-processors 350 to the transceiver 360 over which the data packet is to be sent. The data packet is propagated through the transceiver 360 to its associated egress port and then sent out over the wire.

It will be appreciated that the forwarding card 300, although primarily presented with respect to specific types, numbers, and arrangements of elements and interfaces, may be implemented using various other types, numbers, and/or arrangements of elements, using various other types, numbers, and/or arrangements of interfaces, or the like, as well as various combinations thereof.

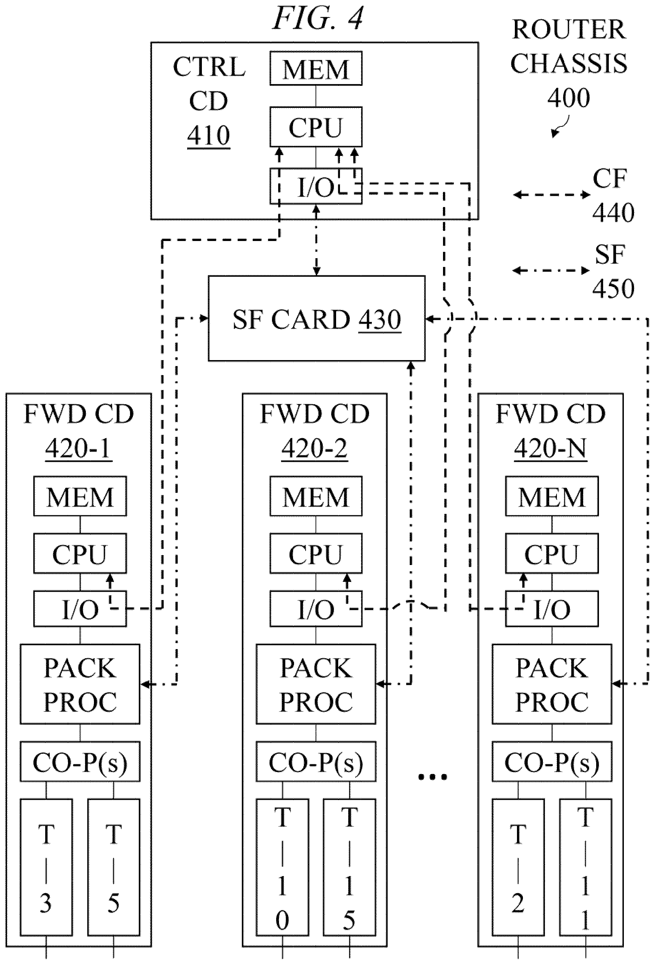

FIG. 4 depicts an example embodiment of a router chassis configured to support communication of inter-card control messages using data packets.

As depicted in FIG. 4, a router chassis 400 includes a control card 410 (denoted as CTRL CD 410), a set of forwarding cards 420-1 to 420-N (collectively, forwarding cards 420, which are denoted as FWD CD 420-1 to FWD CD 420-N), a switch fabric (SF) card 430, a control fabric (CF) 440, and a switch fabric (SF) 450. The router chassis 400 is similar to the router chassis 100 of FIG. 1, while also illustrating additional details of the cards as depicted in FIG. 2 (for the control card) and FIG. 3 (for the forwarding cards). More specifically, the control card 410 is similar to the control card 200 of FIG. 2 and each of the forwarding cards 420 is similar to the forward card 300 of FIG. 3.

As depicted in FIG. 4, the CF 440 provides a fabric supporting control and management messaging between the control plane and the forwarding plane. The CF 440 interconnects the CPU of the control card 410 with the CPUs of each of the forwarding cards 420. The CF 440 is used for control and management messaging between the control card 410 and the forwarding cards 420 using control messages referred to as inter-card control messages. For example, inter-card control messages may be used for configuration of the forwarding plane by the control plane, notification of alarms and alerts generated in the forwarding plane to the control plane (e.g., port down events, card failure events, or the like), communication of heartbeats to check the connectivity between cards, notification of neighboring element failures from the forwarding plane to the control plane (e.g., neighboring node failures, neighboring link failures, or the like), or the like, as well as various combinations thereof. The CF 440 may be implemented in various ways, such as by implementing the CF 440 as an Ethernet network and exchanging inter-card control messages as Transmission Control Protocol (TCP) / Internet Protocol (IP) messages or using any other suitable communications technologies.

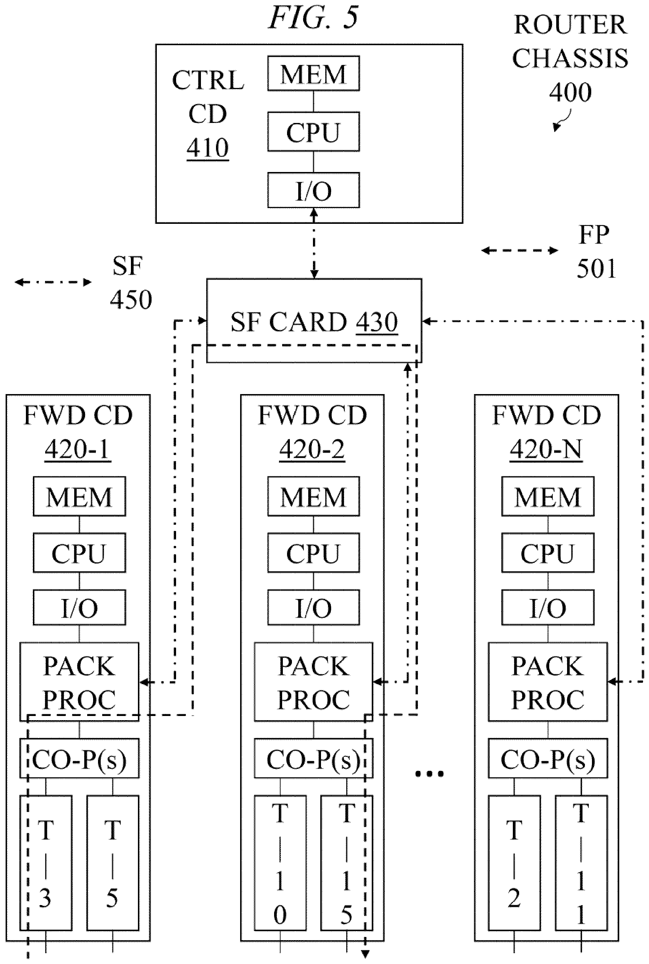

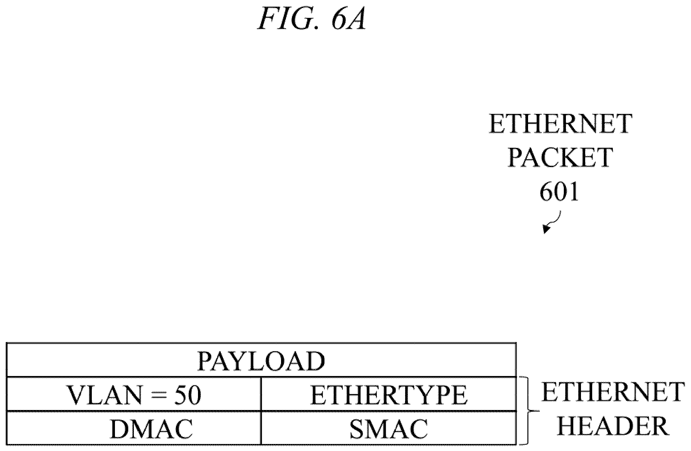

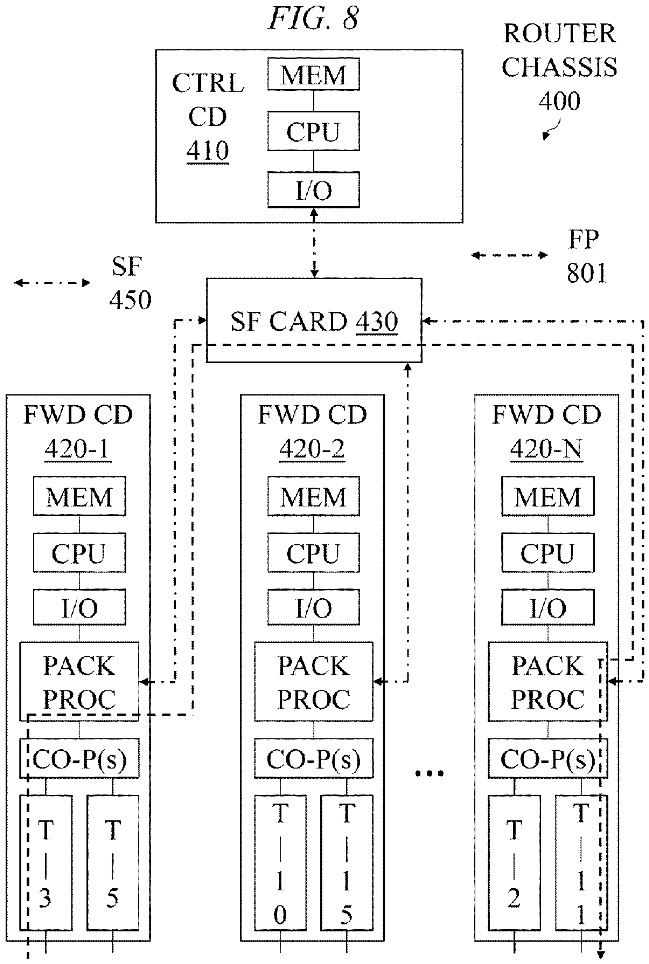

As depicted in FIG. 4, the SF 450 provides a fabric through which data packets are exchanged between cards of the router chassis 400. The SF 450 is used for forwarding data packets and provides the highest bandwidth and lowest latency path in the router chassis 400 (e.g., up to rates at multiples of terabits in core routers with near-zero latency), and is generally lossless. The SF 450 interconnects the packet processors of the forwarding cards 420 via the SF card 430 and connects the packet processors of the forwarding cards 420 with the I/O control interface of the control card 410 via the SF card 430. The SF 450 is a fabric through which a data packet received via a first port in a first forwarding card 420 and sent via a second port in a second forwarding card 420 is transported between the first forwarding card 420 (illustratively, the packet processor of the first forwarding card 420) and the second forwarding card 420 (illustratively, the packet processor of the second forwarding card 420). It will be appreciated that the SF card 430 forms part of the SF 450. The SF 450 may be implemented using application-specific integrated circuit (ASIC)-related communication capabilities (e.g., ASIC-to-ASIC communication capabilities). For example, the SF 450 may be implemented using bundles of serializer/deserializer (SerDes) lanes. For example, a one terabit fabric link in the SF 450 may be composed of 10×100-gigabit SerDes lanes, 20x50-gigabit SerDes lanes, or the like. The operation of the SF 450 in supporting forwarding of data packets may be further understood by considering forwarding of data packets through the SF 450 in conjunction with a fast reroute (FRR) operation, including examples of packet forwarding through the SF 450 before the FRR operation (e.g., as presented with respect to FIG. 5 and FIGs. 6A - 6F) and examples of packet forwarding through the SF 450 after the FRR operation (e.g., as presented with respect to FIG. 8).

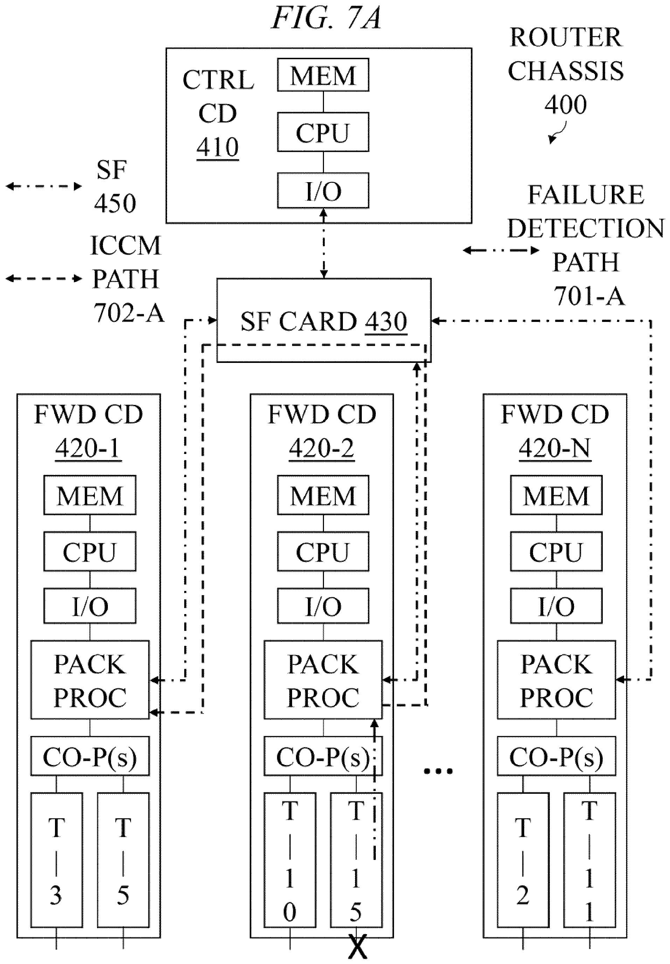

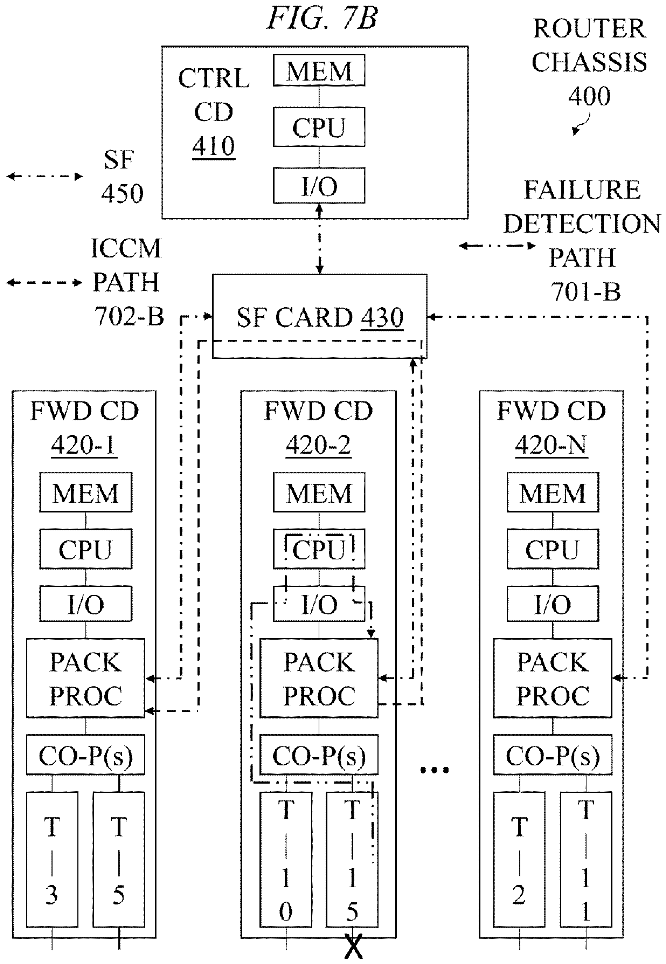

As discussed further below, the SF 450 also is configured to support communication of inter-card control messages in the forwarding plane. The propagation of inter-card control messages over the SF 450 reduces the latency for delivery of the inter-card control messages between cards of the router fabric 400 as compared with use of the CF 440 for delivery of the inter-card control messages between cards of the router fabric 400. The data packet that is used to transport an inter-card control message over the SF 450 may be configured to transport the inter-card control message indirectly on the SF 450 using a data packet protocol (e.g., where the data packet includes the inter-card control message as a payload, includes a data packet protocol header encapsulating the inter-card control message, and includes a switch fabric header encapsulating the data packet protocol header). The data packet that is used to transport an inter-card control message over the SF 450 may be configured to transport the inter-card control message directly on the SF 450 without using a data packet protocol (e.g., where the data packet includes the inter-card control message as a payload and includes a switch fabric header encapsulating the inter-card control message). The operation of the SF 450 in supporting forwarding of inter-card control messages on the forwarding plane may be further understood by considering forwarding of inter-card control messages through the SF 450 in conjunction with a FRR operation, including examples of packet forwarding through the SF 450 before the FRR operation (e.g., as presented with respect to FIG. 5 and FIGs. 6A - 6F), examples of transport of an inter-card control message reporting a failure through the SF 450 (e.g., with two potential paths being illustrated with respect to FIGs. 7A and 7B), and examples of packet forwarding through the SF 450 after the FRR operation (e.g., as presented with respect to FIG. 8).

It will be appreciated that the router chassis 400, although primarily presented with respect to specific types, numbers, and arrangements of elements and interfaces, may be implemented using various other types, numbers, and/or arrangements of elements, using various other types, numbers, and/or arrangements of interfaces, or the like, as well as various combinations thereof.

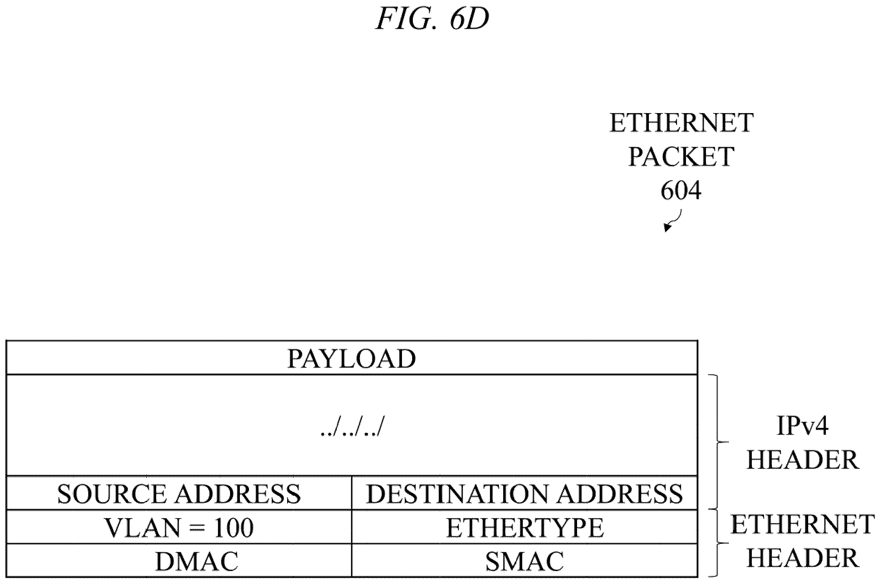

FIG. 5 depicts an example embodiment for forwarding of data packets of a data packet flow through the forwarding plane of the router chassis of FIG. 4 prior to a fast reroute operation. In FIG. 5, the router chassis 400 of FIG. 4 is depicted. The router chassis 400 is supporting a packet flow along a flow path (FP) 501. The packet flow on the FP 501 is an original packet flow prior to a FRR operation (which will be described with respect to FIGs. 7A and 7B). For the packet flow on FP 501, data packets enter the router chassis 400 on port 3 of card 1 (illustratively, on transceiver T-3 of forwarding card 420-1, which is the ingress forwarding card for the packet flow on FP 501) and leave the router chassis 400 on port 15 of card 2 (illustratively, on transceiver T-15 of forwarding card 420-2, which is the egress forwarding card for the packet flow on FP 501). For the packet flow on FP 501, on the ingress forwarding card, the packets are received at the transceiver T-3 over the wire into the router chassis 400 and provided from the transceiver T-3 through the co-processors on the ingress forwarding card to the packet processor on the ingress forwarding card. For the packet flow on FP 501, the packets are transported from the packet processor on the ingress forwarding card to the packet processor on the egress forwarding card via the SF 450. For the packet flow on FP 501, on the egress forwarding card, the packets are routed from the packet processor through the co-processors on the egress forwarding card to the transceiver T-15 for transmission on the wire out of the router chassis 400. It will be appreciated that forwarding of packets through the router chassis 400 of FIG. 4 may be further understood by way of reference to the following examples described with respect to the packet formats of FIG. 6A - 6F (a first example described with respect to FIGs. 6A - 6C and a second example described with respect to FIGs. 6D - 6F).

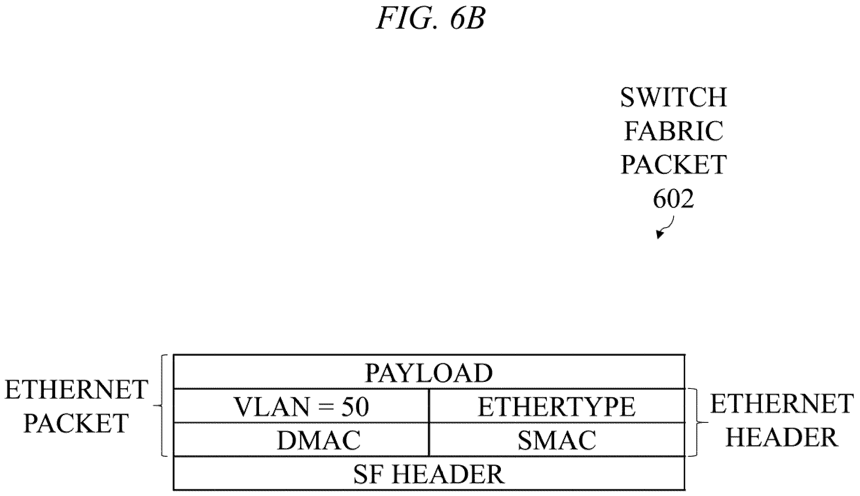

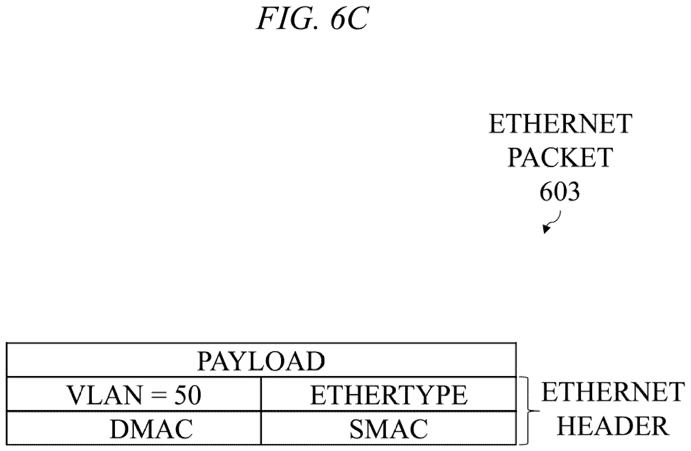

As a first example (which is illustrated in FIG. 5 and described with respect to FIGs. 6A -6C), consider an Ethernet packet entering the router chassis 400 on port 3 of forwarding card 420-1 and leaving the router chassis 400 on port 15 of forwarding card 420-2. The Ethernet packet is depicted as Ethernet packet 601 of FIG. 6A. The packet processor in forwarding card 420-1 parses the Ethernet header in Ethernet packet 601 and determines that the Ethernet header includes a VLAN header for VLAN 50. The packet processor in forwarding card 420-1 then looks up the destination MAC (DMAC) address of the Ethernet header in the forwarding table of VLAN 50. The table entry for the DMAC address of the Ethernet header indicates that the packet needs to be sent out through port 15 of forwarding card 420-2. So, the packet processor in forwarding card 420-1 sends the Ethernet packet 601 to forwarding card 420-2 via the SF 450 by adding an SF header to the Ethernet packet 601 and putting the resulting packet on the SF 450. The SF header that is added to the Ethernet packet 601 includes an indication that the packet needs to be sent out through port 15 in the forwarding card 420-2. The packet including the SF header encapsulating the Ethernet packet 601 is depicted as SF packet 602 of FIG. 6B. The packet processor of the forwarding card 420-1 sends the SF packet 602 over the SF 450. The SF card 430 receives the SF packet 602 and relays the SF packet 602 to the packet processor of the forwarding card 420-2 via the SF 450. The packet processor of the forwarding card 420-2 receives the SF packet 602, removes the SF header from the SF packet 602 to recover the Ethernet packet 601, and, based on the SF header, provides the Ethernet packet 601 to the transceiver of the forwarding card 420-2 for transmission on port 15 of forwarding card 420-2. The Ethernet packet that is recovered based on removal of the SF header is depicted as Ethernet packet 603 of FIG. 6C (which it will be appreciated, as indicated above, is the same as Ethernet packet 601 of FIG. 6A). The flow path of the Ethernet packet of this example within the router chassis 400 is depicted as FP 501 in FIG. 5.

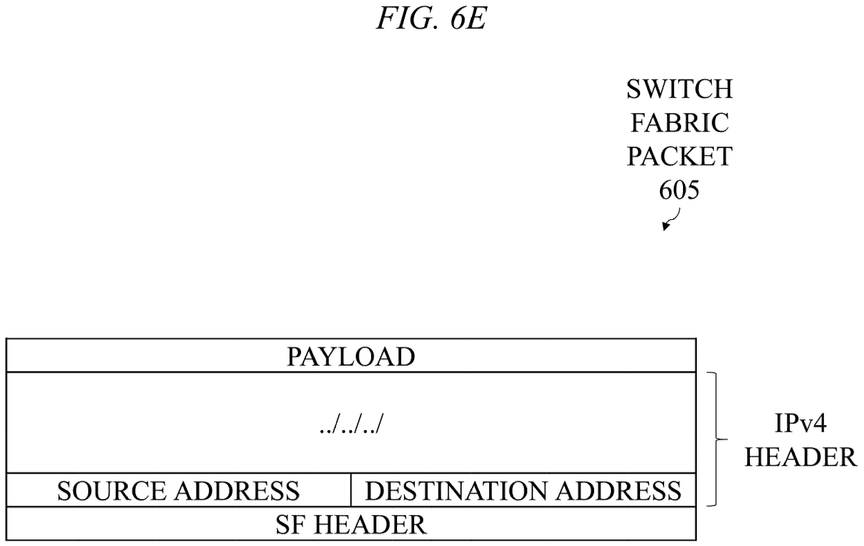

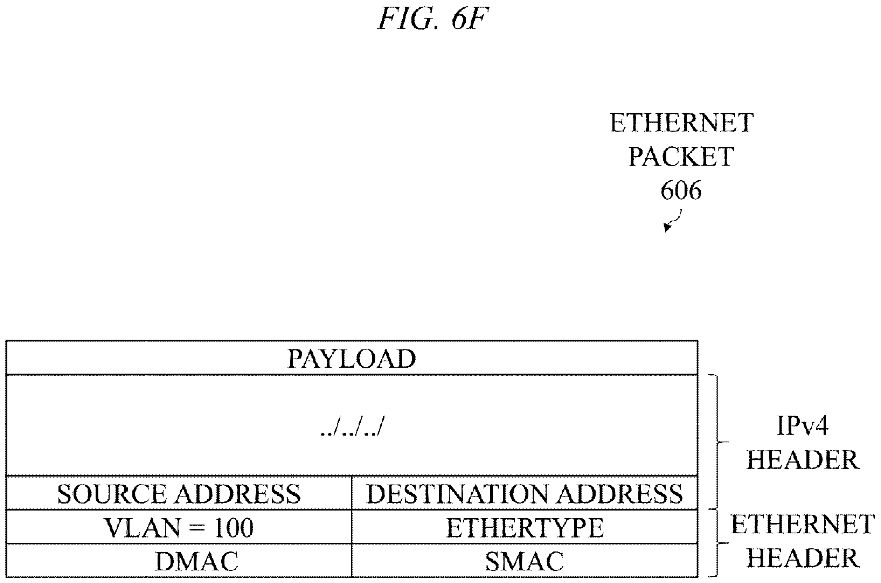

As a second example (which is not illustrated in FIG. 5, but is described with respect to FIGs. 6D - 6F), consider an Ethernet packet entering the router chassis 400 on port 5 of forwarding card 420-1 and leaving the router chassis 400 on port 10 of forwarding card 420-2. The Ethernet packet is Ethernet packet 604 of FIG. 6D. The packet processor in forwarding card 420-1 parses the Ethernet header in Ethernet packet 601 and determines that the Ethernet header includes a VLAN header for VLAN 100. The packet processor in forwarding card 420-1 then looks up the destination MAC (DMAC) address of the Ethernet header in the forwarding table of VLAN 100. The table entry for the DMAC address of the Ethernet header indicates that it is the local address of this router. So, the packet processor of the forwarding card 420-1 strips the Ethernet header and processes the next header, which happens to be an IPv4 header (the EtherType field in the Ethernet header indicates the next header as IPv4). The forwarding card 420-1 looks up the destination IP address in the IP header of the IPv4 packet in the IPv4 routing table. The matching IPv4 route table entry indicates that the IPv4 packet needs to be sent out to next-hop IPv4 address IP-N through port 10 in the forwarding card 420-2. So, the packet processor in forwarding card 420-1 sends the IPv4 packet to forwarding card 420-2 via the SF 450 by adding an SF header to the IPv4 packet and putting the resulting packet on the SF 450. The SF header that is added to the IPv4 packet includes an indication that the IPv4 packet needs to be sent out to IP-N through port 10 in the forwarding card 420-2. The packet including the SF header encapsulating the IPv4 packet is depicted as SF packet 605 of FIG. 6E. The packet processor of the forwarding card 420-1 sends the SF packet 605 over the SF 450. The SF card 430 receives the SF packet 605 and relays the SF packet 605 to the packet processor of the forwarding card 420-2 via the SF 450. The packet processor of the forwarding card 420-2 receives the SF packet 605, removes the SF header from the SF packet 605 to recover the IPv4 packet that was being transported in the Ethernet packet 604, pushes an Ethernet header onto the IPv4 packet to form a new Ethernet packet, and provides the new Ethernet packet to the transceiver of the forwarding card 420-2 for transmission on port 10 of forwarding card 420-2. The Ethernet header that is pushed includes VLAN 200 and the DMAC address in the Ethernet header encodes the MAC address of IP-N. The new Ethernet packet formed based on addition of the Ethernet header to the IPv4 packet is depicted as Ethernet packet 606 of FIG. 6F. The flow path of the Ethernet packet of this example within the router chassis 400, for purposes of clarity, is not depicted in FIG. 5.

FIGs. 7A and 7B depict example embodiments for communication of an inter-card control message through the switch fabric of the router chassis of FIG. 4 based on detection of a failure associated with the data packet flow of FIG. 5. In both FIGs. 7A and 7B, failure notification of a failure associated with the transceiver T-15 of forwarding card 420-2 (which is the egress card for the packet flow on FP 501) is reported from the transceiver T-15 of the forwarding card 420-2 to the packet processor of the forwarding card 420-1 (which is the ingress card for the packet flow on FP 501) so that the forwarding card 420-1 can reroute the packet flow to a backup path based on an FRR operation. As discussed herein, the reporting of the failure from the egress forwarding card 420-2 to the ingress forwarding card 420-1 is based on sending of an inter-card control message (which encodes an indication of the failure) from the packet processor on the egress forwarding card 420-2 to the packet processor on the ingress forwarding card 420-1 using a data packet sent over the SF 450. It will be appreciated that the reporting of the failure from the egress forwarding card 420-2 to the ingress forwarding card 420-1 may take multiple paths within the router chassis 400 (examples embodiments of which are presented with respect to FIG. 7A and FIG. 7B, respectively).

FIG. 7A depicts an example embodiment for communication of an inter-card control message through the switch fabric of the router chassis of FIG. 4 based on detection of a failure associated with the data packet flow of FIG. 5. In FIG. 7A, the packet processor of the egress forwarding card 420-2 detects the failure of port 15 through an internal monitoring mechanism. The detection of the failure by the packet processor of the egress forwarding card 420-2 may take up to a few hundred micro-seconds. In FIG. 7A, the detection of the failure by the packet processor of the egress forwarding card 420-2 is indicated by the failure detection path 701-A. The packet processor of the egress forwarding card 420-2, based on detection of the failure, originates an inter-card control message that encodes the failure on port 15 of card 2. The packet processor of the egress forwarding card 420-2 encapsulates the inter-card control message in a data packet, where a packet payload of the data packet includes the inter-card control message and a data packet header of the data packet encodes an indication that the packet payload includes the inter-card control message. The data packet header may include a data packet protocol header and an SF header for transmission of the data packet on the SF 450 or may only include an SF header for transmission on the data packet on the SF 450. The data packet is sent from the packet processor on the egress forwarding card 420-2 to the packet processor on the ingress forwarding card 420-1 via the SF 450. The communication of the inter-card control message from the egress forwarding card 420-2 to the ingress forwarding card 420-1 using the data packet over the SF 450 may take up to a few microseconds. In FIG. 7A, the propagation of the data packet transporting the inter-card control message via the SF 450 is indicated by the inter-card control message (ICCM) path 702-A. The packet processor of the ingress forwarding card 420-1 receives the data packet over the SF 450, removes the SF header, removes the data packet protocol header (if present), and extracts the inter-card control message from the payload. The packet processor of the ingress forwarding card 420-1 determines, from the inter-card control message, that a failure of port 15 of card 2 is being notified and initiates a reroute of the packet flow of FP 501 to a backup path (e.g., by updating state for the packet flow on FP 501 to redirect the packets of the packet flow to a backup next-hop). The new path of the packet flow after the FRR operation is depicted in FIG. 8. It will be appreciated that, since the detection of the failure and the propagation of the resulting inter-card control message using the SF 450 are both performed in the packet forwarding path, the FRR operation can potentially be achieved in only a few micro-seconds (which is significantly faster than use of the control plane (including CF 440) to communicate inter-card control messages within the router chassis 400). It will be further appreciated that this reduction in latency of the FRR operation will reduce the number of packets that are dropped between when the failure happens and when the packet processor on the ingress forwarding card 420-1 is notified of the failure (during which time the ingress forwarding card 420-1 is still directing the packets of the packet flow on the primary path toward the primary next hop).

FIG. 7B depicts an example embodiment for communication of an inter-card control message through the switch fabric of the router chassis of FIG. 4 based on detection of a failure associated with the data packet flow of FIG. 5. In FIG. 7B, the CPU of the egress forwarding card 420-2 detects the failure of port 15 and reports the failure to the packet processor of the egress forwarding card 420-2. The failure of port 15 may be notified by the transceiver to the CPU through an I/O control bus with an interrupt. The detection of the failure by the CPU of the egress forwarding card 420-2 may take 1-5 milliseconds. The CPU of the egress forwarding card 420-2 notifies the packet processor of the egress forwarding card 420-2 of the detected failure of port 15 (e.g., software running in the CPU of the egress forwarding card 420-2 may notify the packet processor of the egress forwarding card 420-2 of the detected failure of port 15). In FIG. 7B, the detection of the failure by the CPU of the egress forwarding card 420-2 and reporting of the failure from the CPU of the egress forwarding card 420-2 to the packet processor of the egress forwarding card 420-2 is indicated by the failure detection path 701-B. The packet processor of the egress forwarding card 420-2, based on detection of the failure based on the notification from the CPU, originates an inter-card control message that encodes the failure on port 15 of card 2. The packet processor of the egress forwarding card 420-2 encapsulates the inter-card control message in a data packet, where a packet payload of the data packet includes the inter-card control message and a data packet header of the data packet encodes an indication that the packet payload includes the inter-card control message. The data packet header may include a data packet protocol header and an SF header for transmission of the data packet on the SF 450 or may only include an SF header for transmission on the data packet on the SF 450. The data packet is sent from the packet processor on the egress forwarding card 420-2 to the packet processor on the ingress forwarding card 420-1 via the SF 450. The communication of the inter-card control message from the egress forwarding card 420-2 to the ingress forwarding card 420-1 using the data packet over the SF 450 may take up to a few microseconds. In FIG. 7B, the propagation of the data packet transporting the inter-card control message via the SF 450 is indicated by the ICCM path 702-B. The packet processor of the ingress forwarding card 420-1 receives the data packet over the SF 450, removes the SF header, removes the data packet protocol header (if present), and extracts the inter-card control message. The packet processor of the ingress forwarding card 420-1 determines, from the inter-card control message, that a failure of port 15 of card 2 is being notified and initiates a reroute of the packet flow of FP 501 to a backup path (e.g., by updating state for the packet flow on FP 501 to redirect the packets of the packet flow to a backup next-hop). The new path of the packet flow after the FRR operation is depicted in FIG. 8. It will be appreciated that, even where detection of the failure is not performed in the packet forwarding path (rather, here, it goes through the CPU of the egress forwarding card 420-2), since the propagation of the resulting inter-card control message using the SF 450 is performed in the packet forwarding path, the FRR operation can still potentially be achieved in 1-5 milliseconds (which, although slower than the example embodiment of FIG. 7A, is still significantly faster than use of the control plane (including CF 440) to communicate inter-card control messages within the router chassis 400). It will be further appreciated that this reduction in latency of the FRR operation will reduce the number of packets that are dropped between when the failure happens and when the packet processor on the ingress forwarding card 420-1 is notified of the failure (during which time the ingress forwarding card 420-1 is still directing the packets of the packet flow on the primary path toward the primary next hop).

It will be appreciated that, although primarily presented with respect to example embodiments in which the packet processor on the egress forwarding card on which the failure is detected originates the inter-card control message, in at least some example embodiments (e.g., where the detection of the failure is through the CPU of the forwarding card on which the failure is detected), the CPU of the egress forwarding card on which the failure is detected may originate the inter-card control message and provide the inter-card control message to the packet processor of the egress forwarding card on which the failure is detected for propagation of the inter-card control message in-band in the packet forwarding path.

It will be appreciated that notification of the inter-card control message in the forwarding plane obviates the need to send the inter-card control message in the control plane, although it will be appreciated that inter-card control messages still may be sent within the control plane (e.g., for certain types of inter-card control messages, under certain conditions, or the like, as well as various combinations thereof). The use of the control plane for communication of inter-card control messages, and various benefits of using the data forwarding plane rather than the control plane for communication of inter-card control messages, may be further understood by considering the manner in which the FRR operation of FIGs. 7A and 7B may be performed via the control plane using the CF 440. In this example, the failure is detected by the CPU of egress forwarding card 420-2 (e.g., notified by the transceiver of port 15 to the CPU of the egress forwarding card 420-2 through the I/O control bus with an interrupt or, alternatively, detected by the packet processor of the forwarding card 420-2 through an internal monitoring mechanism and notified by the packet processor of the forwarding card 420-2 to the CPU of the forwarding card 420-2), the CPU of the forwarding card 420-2 notifies the control card about the failure by sending a notification message to the control card through the CF 440, the control card receives an interrupt on arrival of the notification message from the CPU of the forwarding card 420-2 through the CF 440, the control card processes the notification message from the CPU of the forwarding card 420-2 and broadcasts the notification message about the failure of port 15 in egress forwarding card 420-2 to each of the forwarding cards 420 through the CF 440, and the CPU of ingress forwarding card 420-1 receives an interrupt on arrival of the notification message from the control card on the CF 440 and updates the state of the packet flow in the packet processor of the ingress forwarding card 420-1 (e.g., via the I/O control bus between the CPU and the packet processor) so that the packet processor on the ingress forwarding card 420-1 redirects packets of the packet flow to the backup path. It will be appreciated that communication of notification messages, including inter-card control messages, in this manner will take longer than communication of the inter-card control messages in the packet forwarding path as presented with respect to FIGs. 7A and 7B.

FIG. 8 depicts an example embodiment for forwarding of data packets of a data packet flow through the forwarding plane of the router chassis of FIG. 4 after a fast reroute operation performed in response to the failure associated with the data packet flow of FIG. 5.

In FIG. 8, the router chassis 400 of FIG. 4 is depicted. The router chassis 400 is supporting the packet flow of FIG. 5, but along a new flow path (FP) 801 that is different than the FP 501 of FIG. 5. The FP 801 represents the rerouting of the packets of the packet flow after the FRR operation (which was described with respect to FIGs. 7A and 7B). For the packet flow on FP 801, packets enter the router chassis 400 on port 3 of card 1 (illustratively, on transceiver T-3 of forwarding card 420-1, which is the ingress forwarding card for the packet flow on FP 501) and leave the router chassis 400 on port 11 of card N (illustratively, on transceiver T-11 of forwarding card 420-N, which is the egress forwarding card for the packet flow on FP 801). For the packet flow on FP 801, on the ingress forwarding card, the packets are received at the transceiver T-3 over the wire into the router chassis 400 and provided from the transceiver T-3 through the co-processors on the ingress forwarding card to the packet processor on the ingress forwarding card. For the packet flow on FP 801, the packets are transported from the packet processor on the ingress forwarding card to the packet processor on the egress forwarding card via the SF 450. For the packet flow on FP 801, on the egress forwarding card, the packets are routed from the packet processor through the co-processors on the egress forwarding card to the transceiver T-11 for transmission on the wire out of the router chassis 400. This represents rerouting of the packets of the packet flow after notification of the failure of the primary path that resulted in the FRR operation (a change from the primary FP 501 to the backup FP 801).

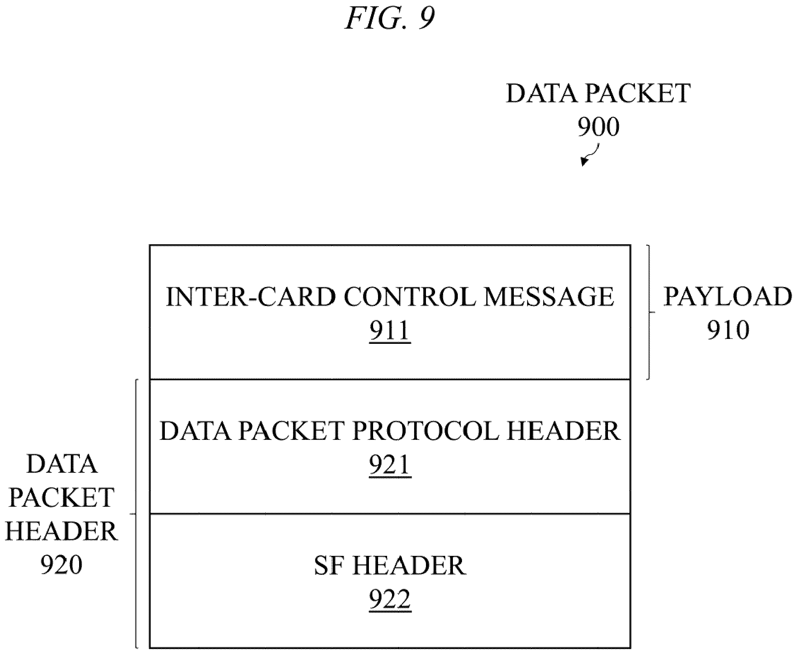

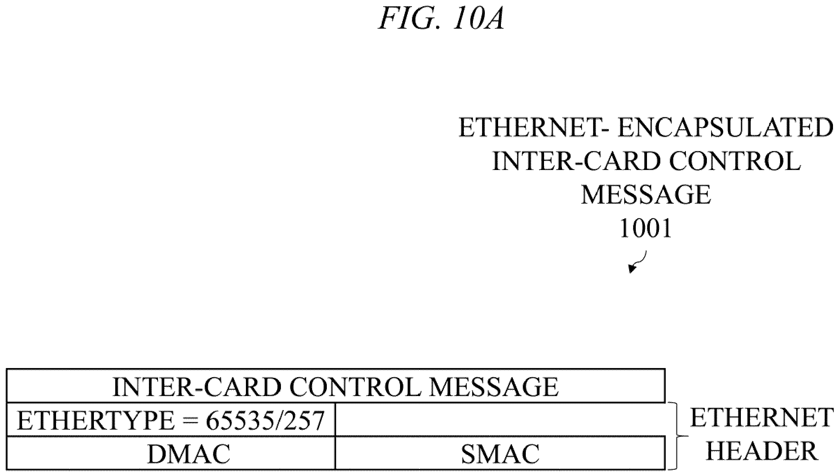

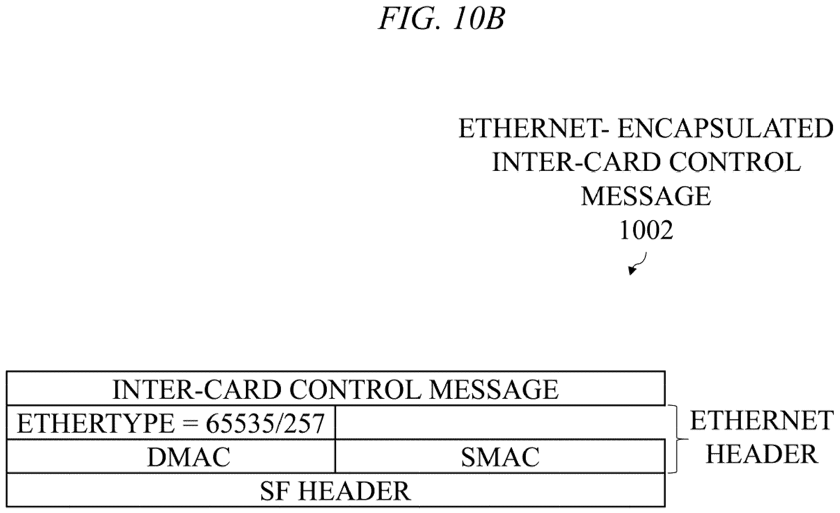

FIG. 9 depicts an example embodiment for supporting communication of an inter-card control message using a data packet where the inter-card control message is transported indirectly on the switch fabric. As depicted in FIG. 9, a data packet 900 includes a payload 910 and a data packet header 920 encapsulating the payload 910. The payload 910 includes the inter-card control message 911 that is being transported by the data packet 900 on the data plane forwarding path that includes the switch fabric. The data packet header 920 includes a data packet protocol header 921 encapsulating the payload 910 and an SF header 922 encapsulating the data packet protocol header 921 for supporting communication of the inter-card control message 911 over the switch fabric. The data packet protocol header 921 may be a header of any data packet protocol which may be sent over the switch fabric as a data packet (e.g., Ethernet, MPLS, BIER, IP, or the like). The data packet protocol header 921 and/or the SF header 922 is configured to indicate that the payload 910 includes the inter-card control message 911. It will be appreciated that the inter-card control message may be considered to be data packet protocol encapsulated and SF-encapsulated (i.e., the inter-card control message 911 is transported by a data packet protocol which is further transported by the SF header). It will be appreciated that the data packet 900 may be further understood by considering an example in which an inter-card control message is transported over the switch fabric using Ethernet (as depicted with respect to FIGs. 10A and 10B).

FIGs. 10A - 10B depict example embodiments for supporting communication of an inter-card control message using a data packet where the data packet is based on Ethernet.

FIG. 10A depicts an example embodiment of an Ethernet-encapsulated inter-card control message. The Ethernet-encapsulated inter-card control message 1001 includes an inter-card control message as a payload and an Ethernet header that encapsulates the inter-card control message. The Ethernet header includes SMAC address and DMAC address fields, as well as an EtherType field. The SMAC address can be encoded with all zeros or with a valid MAC address assigned to the router chassis. The DMAC address may be a special address configured to indicate that the payload below the Ethernet header is an inter-card control message. The special MAC address can be specific to the vendor of the routing platform. The first 3 bytes of any 6-byte MAC address are always the Organizationally Unique Identifier (OUI), which identifies an organization that has procured the block of 16,777,216 MAC addresses (number of MAC addresses possible with the remaining 3 bytes) from the Institute of Electrical and Electronics Engineers (IEEE). The organization can then assign MAC addresses from the allocated block for the devices it produces. So, the vendor of a routing platform can assign a unique MAC address from its assigned block to be used as the special DMAC address to identify an inter-card control message within a data packet. The 2-byte EtherType field is supposed to indicate the payload type; in this case, since the payload is not a standard protocol, either the maximum value 65535 (reserved) or experimental protocol value 257 can be encoded in the Ethertype field. It will be appreciated that, although primarily described with respect to use of the DMAC address in the Ethernet header to provide the indication that the data packet is transporting an inter-card control message, the indication that the data packet is transporting an inter-card control message may be encoded with the Ethernet header in various other ways (or, alternatively, may be encoded within an SF header that encapsulates the Ethernet-encapsulated inter-card control message 1001 for transport over the SF).

FIG. 10B depicts an example embodiment of an Ethernet-encapsulated inter-card control message that is further encapsulated with a switch fabric header. The Ethernet-encapsulated inter-card control message 1002 includes an inter-card control message as a payload, an Ethernet header that encapsulates the inter-card control message, and an SF header that encapsulates the Ethernet header for propagation of the inter-card control message over the SF. The inter-card control message and the Ethernet header correspond to the Ethernet-encapsulated inter-card control message 1001 of FIG. 10A. When the packet processor of a destination card for the inter-card control message receives the Ethernet-encapsulated inter-card control message 1002, the packet processor of the destination card for the inter-card control message removes the SF header and finds the Ethernet data packet underneath. The DMAC address in the Ethernet header indicates that the Ethernet header encapsulates an inter-card control message. So, the packet processor of the destination card for the inter-card control message removes the Ethernet header to recover the inter-card control messages and then handles the inter-card control message (e.g., processing the inter-card control message locally at the packet processor of the destination card, sending the inter-card control message to the CPU of the destination card for processing of the inter-card control message locally at the CPU of the destination card, or the like, as well as various combinations thereof). It will be appreciated that, although primarily described with respect to use of the DMAC address in the Ethernet header to provide the indication that the data packet is transporting an inter-card control message, the indication that the data packet is transporting an inter-card control message may be encoded with the Ethernet header in various other ways (or, alternatively, may be encoded within an SF header of the Ethernet-encapsulated inter-card control message 1002 for transport over the SF).

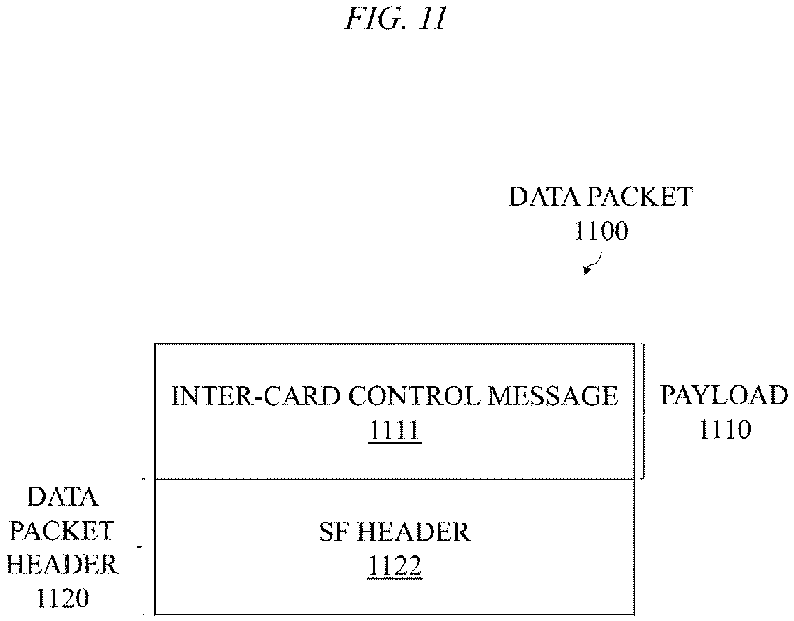

FIG. 11 depicts an example embodiment for supporting communication of an inter-card control message using a data packet where the inter-card control message is transported directly on the switch fabric. As depicted in FIG. 11, a data packet 1100 includes a payload 1110 and a data packet header 1120 encapsulating the payload 1110. The payload 1110 includes the inter-card control message 1111 that is being transported by the data packet 1100 on the data plane forwarding path that includes the switch fabric. The data packet header 1120 includes an SF header 1122 for supporting communication of the inter-card control message 1111 over the switch fabric. The SF header is configured to indicate that the payload 1110 includes the inter-card control message 1111. It will be appreciated that the inter-card control message may be considered to be SF-encapsulated (i.e., the inter-card control message is transported directly by the SF header without any intervening data packet protocol header as in FIG. 9).

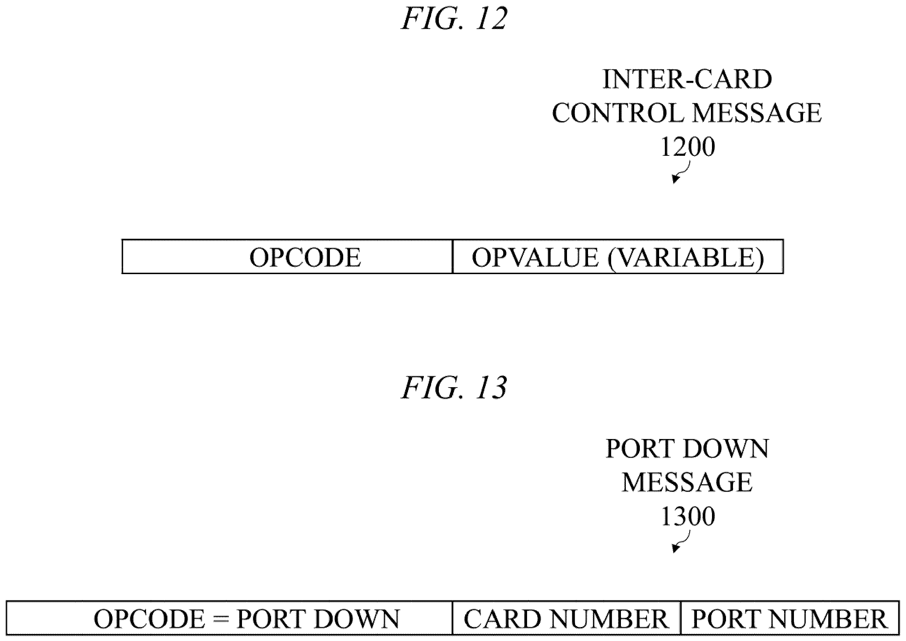

FIG. 12 depicts an example embodiment of an inter-card control message which may be transported using a data packet on the switch fabric. As depicted in FIG. 12, the inter-card control message 1200 includes a fixed-sized OPCODE field and a variable-sized OP VALUE field. For example, the OPCODE field may be a 2-byte field (although it will be appreciated that various other sizes may be supported). The OPCODE field may encode a control message type of the inter-card control message and the OP VALUE field may encode control information of the inter-card control message. For example, where the inter-card control message is a control message reporting a link failure, the OPCODE field may encode a value indicative that the inter-card control message is a notification of a link failure event and the OPVALUE field may encode information describing the link failure event (e.g., a card number and a port number associated with the link experiencing the link failure event). For example, an example of which is presented in FIG. 13, where the inter-card control message is a control message reporting a PORT DOWN event, the OPCODE field may encode a value indicative that the inter-card control message is a notification of a port down event and the OPVALUE field may encode information describing the port down event (e.g., a card number of a card on which the port down event occurred and a port number of the port that is down). It will be appreciated that inter-card control messages may be formatted in various other ways (e.g., using different sized fields, using different numbers of fields, using different types of fields, using different arrangements of fields, or the like, as well as various combinations thereof).

FIG. 13 depicts an example embodiment of an inter-card control message, which may be transported using a data packet on the switch fabric, configured to report a port down event. The inter-card control message configured to report the port down event is depicted as port down message 1300. The port down message 1300 may be used, for example, to trigger an FRR operation for packet flows affected by the port down event. As depicted in FIG. 13, the port down message 1300 includes a fixed-sized OPCODE field and a variable-sized OPVALUE field. For example, the OPCODE field may be a 2-byte field and the OPVALUE field may be a 2-byte field (although it will be appreciated that various other sizes may be supported). The OPCODE field encodes a control message type of the inter-card control message which, in this example, is a control message reporting a PORT DOWN event (i.e., the OPCODE field encodes a value indicative that the inter-card control message is a notification of a port down event). The OPVALUE field encodes information of the inter-card control message which, in this example, is information describing the details of the port down event. In this example, the OPVALUE field is divided into two one-byte sub-fields: a one-byte CARD NUMBER field that encodes a card number of a card on which the port down event occurred and a one-byte PORT NUMBER field that encodes a port number of the port that is down). In the FRR example presented with respect to FIG. 5 (before failure), FIGs. 7A and 7B (reporting of the failure via the data plane forwarding path), and FIG. 8 (after FRR in response to reporting of the failure), when port 15 of forwarding card 2 fails then the forwarding card 2 generates a port down event with CARD NUMBER = 2 and PORT NUMBER = 15. It will be appreciated that inter-card control messages may be formatted in various other ways (e.g., using different sized fields, using different numbers of fields, using different types of fields, using different arrangements of fields, or the like, as well as various combinations thereof).

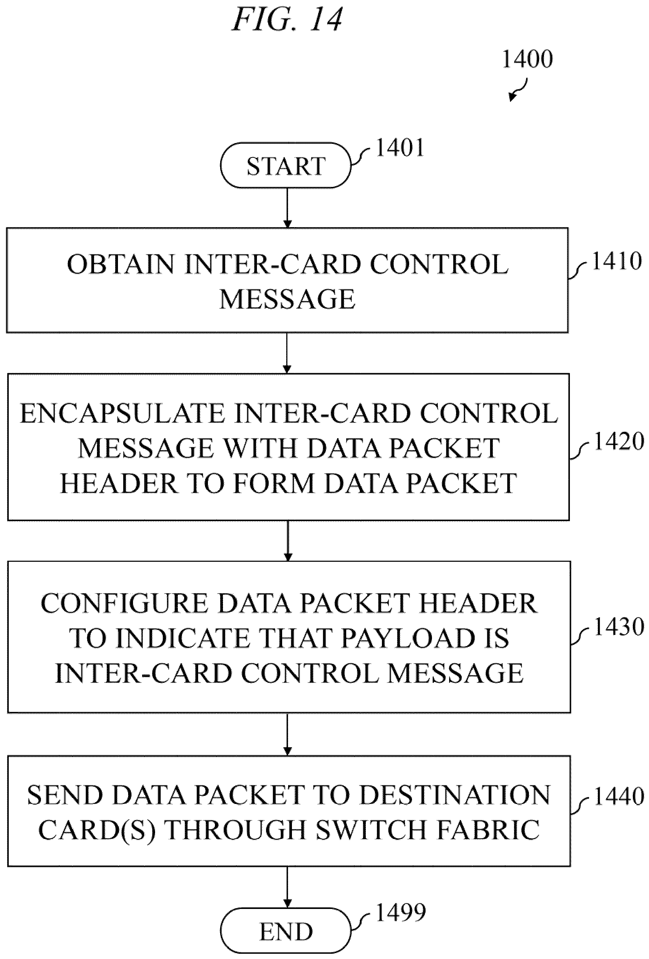

FIG. 14 depicts an example embodiment of a method for supporting sending of an inter-card control message using a data packet on a switch fabric of a router chassis. The data packet including the inter-card control message is sent through the data packet forwarding path (including the switch fabric). It will be appreciated that, although primarily presented herein as being performed serially, at least a portion of the functions of method 1400 may be performed contemporaneously or in a different order than as presented in FIG. 14. At block 1401, the method 1400 begins. At block 1410, an inter-card control message is obtained. The inter-card control message is obtained by a forwarding card of a router chassis and is intended or delivery to one or more other cards of the router chassis (e.g., one or more other forwarding cards, one or more control cards, or the like, as well as various combinations thereof). The inter-card control message may be obtained by being generated (e.g., by a CPU of the forwarding card, by a packet processor of the forwarding card, or the like), being received (e.g., being received by a packet processor of the forwarding card from a CPU of the forwarding card), or the like. At block 1420, the inter-card control message is encapsulated with a data packet header to form a data packet. The data packet header may include a data packet protocol header and a switch fabric header or may include only a switch fabric header. At block 1430, the data packet header is configured to indicate that the payload of the data packet includes the inter-card control message. The configuration of the data packet header to indicate that the data packet is transporting an inter-card control message may be an indicator set in the data packet protocol header (when present in the data header) and/or an indicator set in the switch fabric header. At block 1440, the data packet is sent to one or more destination cards through the switch fabric. The destination card(s) may include one or more forwarding cards, one or more control cards, or the like, as well as various combinations thereof. At block 1499, the method 1400 ends. It will be appreciated that various other functions presented herein may be implemented within the context of the method 1400 of FIG. 14.

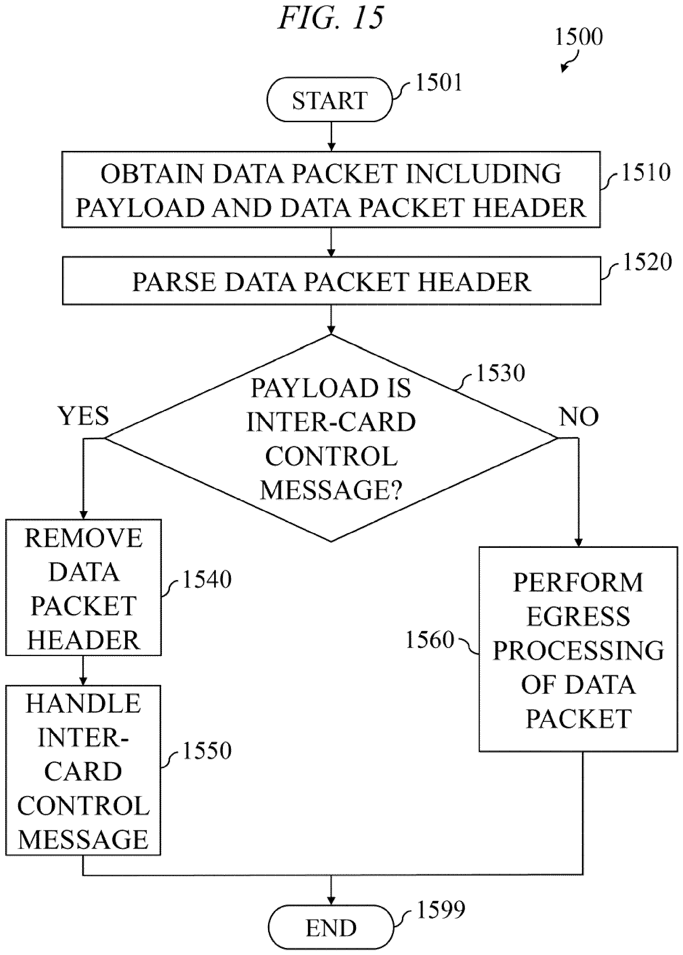

FIG. 15 depicts an example embodiment of a method for supporting receiving of an inter-card control message using a data packet on a switch fabric of a router chassis. The data packet including the inter-card control message is received through the data packet forwarding path (including the switch fabric). It will be appreciated that, although primarily presented herein as being performed serially, at least a portion of the functions of method 1500 may be performed contemporaneously or in a different order than as presented in FIG. 15. At block 1501, the method 1500 begins. At block 1510, a data packet is obtained. The data packet includes a data packet header and a payload. The data packet header may include a data packet protocol header and a switch fabric header or may only include a switch fabric header. The data packet may be obtained by receiving the data packet over a switch fabric. At block 1520, the data packet header is parsed. The data packet header may be parsed to determine if the data packet header includes an indication that the payload of the data packet is an inter-card control message. The configuration of the data packet header to indicate that the data packet is transporting an inter-card control message may be an indicator set in the data packet protocol header (when present in the data header) and/or an indicator set in the switch fabric header. At block 1530, a determination is made as to whether the payload of the data packet is an inter-card control message. If the payload of the data packet is an inter-card control message, then the method 1500 proceeds to block 1540. If the payload of the data packet is not an inter-card control message (i.e., the data packet is a regular data packet being forwarded over the data plane forwarding path via the switch fabric), then the method 1500 proceeds to block 1560. At block 1540, the data packet header is removed from the data packet to recover the inter-card control message in the payload, and then the method 1500 proceeds to block 1550. At block 1550, the inter-card control message is handled. The handling of the inter-card control message may include local processing of the inter-card control message by the card that received the data packet (e.g., by a packet processor of a forwarding card, a CPU of a forwarding card, a CPU of a control card, or the like), and then the method 1500 proceeds to block 1599 where the method 1500 ends. At block 1560, egress processing of the data packet is performed (because the data packet is a regular data packet being forwarded over the data plane forwarding path), and then the method 1500 proceeds to block 1599 where the method 1500 ends. At block 1599, the method 1500 ends. It will be appreciated that various other functions presented herein may be implemented within the context of the method 1500 of FIG. 15.

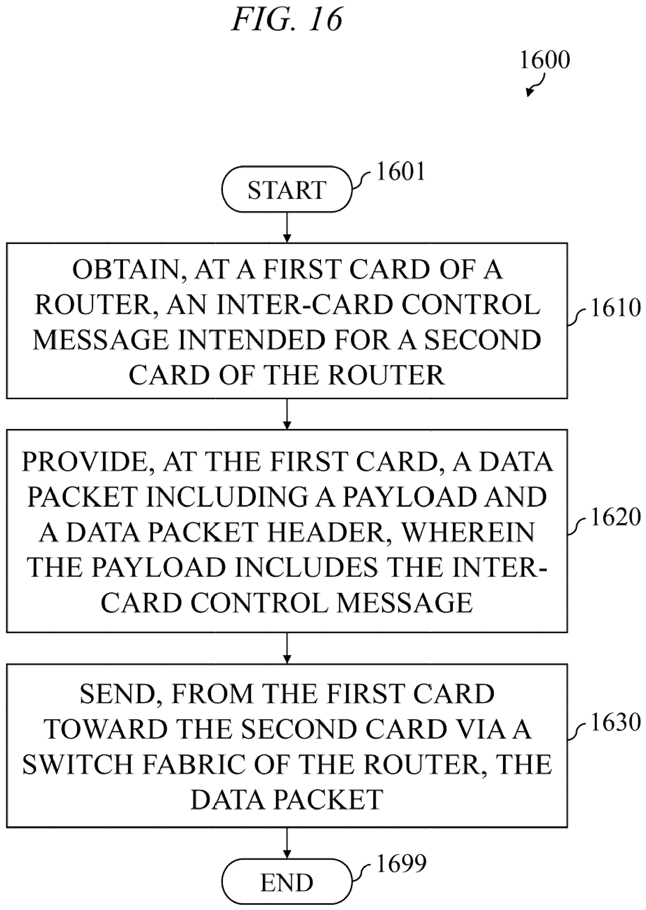

FIG. 16 depicts an example embodiment of a method for supporting sending of an inter-card control message using a data packet on a switch fabric of a router chassis. It will be appreciated that, although primarily presented herein as being performed serially, at least a portion of the functions of method 1600 may be performed contemporaneously or in a different order than as presented in FIG. 16. At block 1601, the method 1600 begins. At block 1610, obtain, at a first card of a router, an inter-card control message intended for a second card of the router. At block 1620, provide, at the first card, a data packet including a payload and a data packet header, wherein the payload includes the inter-card control message. At block 1630, send, from the first card toward the second card via a switch fabric of the router, the data packet. At block 1699, the method 1600 ends. It will be appreciated that various other functions presented herein may be implemented within the context of the method 1600 of FIG. 16.

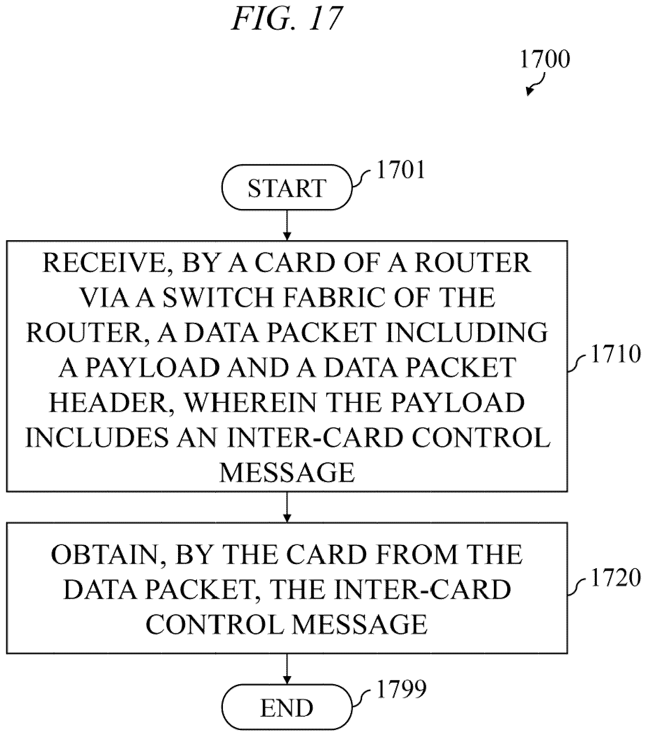

FIG. 17 depicts an example embodiment of a method for supporting receiving of an inter-card control message using a data packet on a switch fabric of a router chassis. It will be appreciated that, although primarily presented herein as being performed serially, at least a portion of the functions of method 1700 may be performed contemporaneously or in a different order than as presented in FIG. 17. At block 1701, the method 1700 begins. At block 1710, receive, by a card of a router via a switch fabric of the router, a data packet including a payload and a data packet header, wherein the payload includes an inter-card control message. At block 1720, obtain, by the card from the data packet, the inter-card control message. At block 1799, the method 1700 ends. It will be appreciated that various other functions presented herein may be implemented within the context of the method 1700 of FIG. 17.

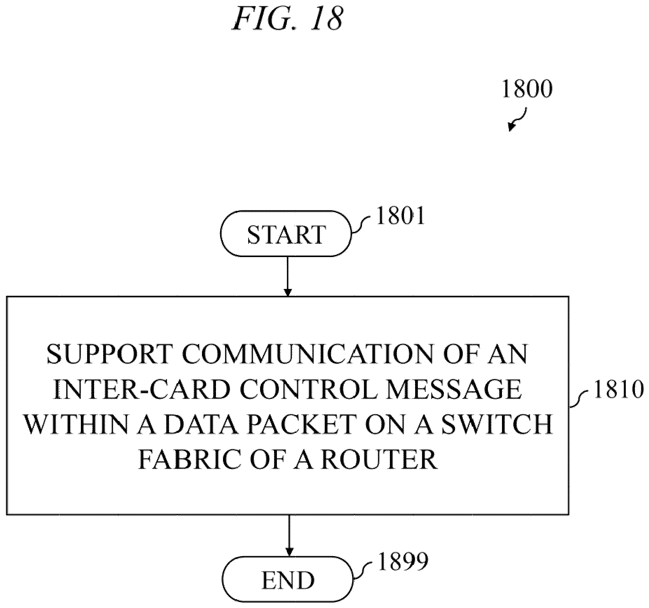

FIG. 18 depicts an example embodiment of a method for supporting communication of an inter-card control message using a data packet on a switch fabric of a router chassis. It will be appreciated that, although primarily presented herein as being performed serially, at least a portion of the functions of method 1800 may be performed contemporaneously or in a different order than as presented in FIG. 18. At block 1801, the method 1800 begins. At block 1810, support communication of an inter-card control message within a data packet on a switch fabric of a router. At block 1899, the method 1800 ends. It will be appreciated that various other functions presented herein may be implemented within the context of the method 1800 of FIG. 18.

Various example embodiments for supporting communication of inter-card control messages in a router chassis may provide various advantages or potential advantages. For example, various example embodiments for supporting communication of inter-card control messages in a router chassis may be configured to provide an extremely low latency control channel between cards in a router chassis, by using data packets on the switch fabric to avoid overheads typically encountered in the control channel that typically orchestrates failure detection, failure notification, and actions for steering of impacted traffic flows to backup paths, thereby enabling fast rerouting of traffic between forwarding cards of the router chassis with near-zero downtime in the event of a failure. For example, various example embodiments for supporting communication of inter-card control messages in a router chassis may be configured to multiplex inter-card control messages (e.g., time-sensitive failure notification messages associated with FRR operations or other types of time-sensitive inter-card control messages) into the data packet forwarding path (e.g., the switch fabric) so that the inter-card control messages are received transferred between cards of the router chassis with the same latency as regular data packets (e.g., in less than 10 microseconds or potentially faster), thereby supporting a significant boost in the performance of the router chassis for various types of operations. For example, various example embodiments for supporting communication of inter-card control messages in a router chassis may be configured to enable FRR to be achieved with near-zero downtime using the existing infrastructure of a routing system by multiplexing the extremely time sensitive inter-card control messages (reporting failures which trigger FRR) over the SF. For example, various example embodiments for supporting communication of inter-card control messages in a router chassis, based on in-band communication of inter-card control messages in the packet forwarding plane, may be configured to use existing infrastructure of the router chassis to support FRR operations with much lower latency (e.g., achieving FRR in only a few millisecond or even in only a few microseconds, or potentially faster as packet forwarding planes continue to improve to support faster speeds) than where inter-card control messages are communicated in the control plane (where FRR operations can take tens of milliseconds or even longer). For example, various example embodiments for supporting communication of inter-card control messages in a router chassis may be configured to obviate the need for implementing various complicated and/or expensive approaches in the control plane (e.g., use of a mesh-based CF between all cards to let direct communication of messages between cards) to try to reduce inter-card control message propagation times for supporting operations such as FRR operations and other operations in which reduced latency is beneficial. Various example embodiments for supporting communication of inter-card control messages in a router chassis may provide various other advantages or potential advantages.

It will be appreciated that, although primarily presented herein within the context of supporting inter-card control messages in a router chassis, at least some example embodiments may be applied for supporting inter-card control messages between cards that may be arranged in other ways (e.g., between cards in different router chassis, between cards not necessarily arranged within a router chassis, between cards associated with a router chassis implemented as a virtual router chassis, or the like, as well as various combinations thereof).

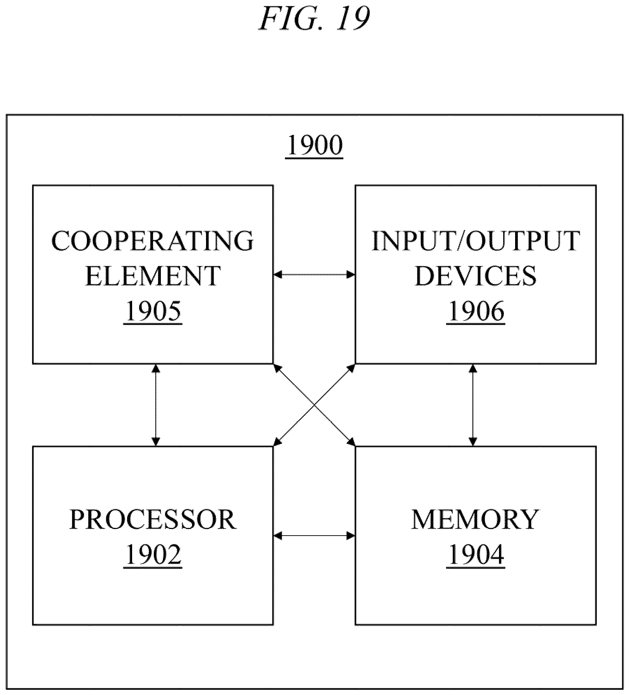

FIG. 19 depicts an example embodiment of a computer suitable for use in performing various functions presented herein.

The computer 1900 includes a processor 1902 (e.g., a central processing unit (CPU), a processor, a processor having a set of processor cores, a processor core of a processor, or the like) and a memory 1904 (e.g., a random access memory (RAM), a read-only memory (ROM), or the like). In at least some example embodiments, the computer 1900 may include at least one processor and at least one memory storing instructions that, when executed by the at least one processor, cause the computer to perform various functions presented herein.

The computer 1900 also may include a cooperating element 1905. The cooperating element 1905 may be a hardware device. The cooperating element 1905 may be a process that can be loaded into the memory 1904 and executed by the processor 1902 to implement various functions presented herein (in which case, for example, the cooperating element 1905 (including associated data structures) can be stored on a non-transitory computer readable medium, such as a storage device or other suitable type of storage element (e.g., a magnetic drive, an optical drive, or the like)).

The computer 1900 also may include one or more input/output devices 1906. The input/output devices 1906 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1900 may represent a general architecture and functionality suitable for implementing functional elements described herein, portions of functional elements described herein, or the like, as well as various combinations thereof. For example, the computer 1900 may provide a general architecture and functionality that is suitable for implementing one or more elements presented herein. For example, the computer 1900 may provide a general architecture and functionality that is suitable for implementing at least a portion of a router chassis, a control card or a portion thereof, a forwarding card or a portion thereof, a switch fabric card or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory storing instructions which, when executed by the at least one processor, cause the apparatus at least to:
obtain, at a first card of a router, an inter-card control message intended for a second card of the router;
provide, at the first card, a data packet including a payload and a data packet header, wherein
the payload includes the inter-card control message; and
send, from the first card toward the second card via a switch fabric of the router, the data packet.

2. The apparatus according to claim 1, wherein
the data packet header includes one of:
a switch fabric header; or
a data packet protocol header and a switch fabric header.

3. The apparatus according to any of claims 1 to 2, wherein
the data packet header includes an indication that the payload includes the inter-card control message.

4. The apparatus according to claim 3, wherein
the data packet header includes a data packet protocol header and a switch fabric header, wherein
the indication that the payload includes the inter-card control message is encoded within an address field of the data packet protocol header.

5. The apparatus according to any of claims 1 to 4, wherein
the first card is a forwarding card.

6. The apparatus according to claim 5, wherein
wherein the inter-card control message is generated by a packet processor of the forwarding card or a central processing unit of the forwarding card

7. A method, comprising:
obtaining, at a first card of a router, an inter-card control message intended for a second card of the router;
providing, at the first card, a data packet including a payload and a data packet header, wherein
the payload includes the inter-card control message; and
sending, from the first card toward the second card via a switch fabric of the router, the data packet.

8. An apparatus, comprising:
at least one processor; and at least one memory storing instructions which, when executed by the at least one processor, cause the apparatus at least to:
receive, by a card of a router via a switch fabric of the router, a data packet including a payload and a data packet header, wherein
the payload includes an inter-card control message; and
obtain, by the card from the data packet, the inter-card control message.

9. The apparatus according to claim 8, wherein
the data packet header includes one of:
a switch fabric header; or
a data packet protocol header and a switch fabric header.

10. The apparatus according to any of claims 8 to 9, wherein
the data packet header includes an indication that the payload includes the inter-card control message.

11. The apparatus according to claim 10, wherein
the inter-card control message is obtained from the data packet based on the indication that the payload includes the inter-card control message.

12. The apparatus according to any of claims 8 to 11, wherein
the card is a forwarding card or a control card.

13. The apparatus according to any of claims 8 to 11, wherein
the card is a forwarding card, wherein
the data packet is received by a packet processor of the forwarding card, wherein
the inter-card control message is obtained from the data packet by the packet processor of the forwarding card.

14. The apparatus according to claim 13, wherein
the inter-card control message is processed by the packet processor of the forwarding card.

15. A method, comprising:
receiving, by a card of a router via a switch fabric of the router, a data packet including a payload and a data packet header, wherein
the payload includes an inter-card control message; and
obtaining, by the card from the data packet, the inter-card control message.
